(19)

Europäisches
Patentamt
European
Patent Office
Office européen
des brevets

(11)  **EP 4 252 975 A1**

(12)  **EUROPEAN PATENT APPLICATION**
published in accordance with Art. 153(4) EPC

(43) Date of publication:
**04.10.2023  Bulletin 2023/40**

(21) Application number: **21898014.2**

(22) Date of filing: **25.11.2021**

(51) International Patent Classification (IPC):
***B25J 13/08*** *(2006.01)*

(52) Cooperative Patent Classification (CPC):
**B25J 13/08**

(86) International application number:
**PCT/JP2021/043129**

(87) International publication number:
**WO 2022/114042 (02.06.2022 Gazette 2022/22)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **30.11.2020  JP 2020198602
28.01.2021  JP 2021012317
24.02.2021  JP 2021027362**

(71) Applicant: **Sumitomo Heavy Industries, Ltd.
Tokyo 141-6025 (JP)**

(72) Inventors:
• **MIYAZAWA, Noritsugu**
  **Yokosuka-shi, Kanagawa 237-8555 (JP)**
• **HARA, Kosuke**
  **Yokosuka-shi, Kanagawa 237-8555 (JP)**
• **USUI, Dotaro**
  **Yokosuka-shi, Kanagawa 237-8555 (JP)**

(74) Representative: **Louis Pöhlau Lohrentz
Patentanwälte
Postfach 30 55
90014 Nürnberg (DE)**

(54)  **INFORMATION PROCESSING DEVICE, AND PICKING DEVICE**

(57)  Provided are an information processing device and a picking device capable of efficiently estimating a posture of an object by performing a contact. The information processing device includes a storage unit that stores object information indicating a shape and a size of an object (Q1), a force sensor that can acquire detection information of a contact point when the force sensor comes into contact with any surface, a movement control unit that moves the force sensor, and an estimation unit that estimates a posture of the object (Q1) based on the detection information obtained by a plurality of contacts of the force sensor with the object and the object information. The movement control unit moves the force sensor so that the force sensor comes into contact with different surfaces (s1, s2) of the object in the plurality of contacts.

## FIG. 3A

**(Cont. next page)**

EP 4 252 975 A1

## FIG. 3B

## FIG. 3C

## FIG. 3D

**Description**

Technical Field

The present invention relates to an information processing device and a picking device.

Background Art

PTL 1 shows a system that recognizes a posture of an object from an image of the object and measurement information of a contact position with the object.

Citation List

Patent Literature

[PTL 1] Japanese Unexamined Patent Publication No. 2017-136677

Summary of Invention

Technical Problem

For transparent and black objects, objects with mirror surfaces, or objects covered with cloth or the like, it is difficult to recognize postures of the objects only from images. In the system of PTL 1, a position of an object wrapped in a plastic bag or a cushioning material can be recognized by using the measurement information due to the contact with the object together. However, in a device that estimates a posture of an object by contact, there is room for improvement in a method of contacting the object in order to perform efficient estimation.
An object of the present invention is to provide an information processing device and a picking device capable of efficiently estimating a posture of an object by using detection information obtained by contact.

Solution to Problem

An information processing device according to the present invention is
an information processing device that estimates a posture of an object, and includes:

a storage unit that stores object information indicating a shape and a size of the object;
a force sensor that acquires detection information on a contact point by a contact;
a movement control unit that moves the force sensor; and
an estimation unit that estimates the posture of the object based on the detection information obtained from a plurality of the contacts of the force sensor with the object, and the object information,
in which the movement control unit moves the force sensor so that the force sensor comes into contact with different surfaces of the object in the plurality of contacts.

A picking device according to the present invention includes:

the information processing device; and
a take-out mechanism that takes out the object using an estimation result of the estimation unit.

Advantageous Effects of Invention

According to the present invention, it is possible to provide an information processing device and a picking device capable of efficiently estimating a posture of an object by using a contact.

Brief Description of Drawings

Fig. 1 is a block diagram showing a picking device according to a first embodiment of the present invention.
Fig. 2 is a flowchart showing an example of a procedure of a picking process performed by a control unit.

Fig. 3A is an explanatory view of a first step in a first example of a process of estimating a posture of an object.

Fig. 3B is an explanatory view of a second step in the first example.

Fig. 3C is an explanatory view of a third step in the first example.

Fig. 3D is an explanatory view of a fourth step in the first example.

Fig. 3E is an explanatory view of the fourth step in the first example.

Fig. 4A is an explanatory view of a first step in a second example of the process of estimating a posture of an object.

Fig. 4B is an explanatory view of a second step in the second example.

Fig. 4C is an explanatory view of a third step in the second example.

Fig. 4D is an explanatory view of a fourth step in the second example.

Fig. 4E is an explanatory view of a fifth step in the second example.

Fig. 4F is an explanatory view of a sixth step in the second example.

Fig. 5 is a block diagram showing functions of a control device according to a second embodiment.

Fig. 6A is a plan view showing an example of an allowable movement range.

Fig. 6B is a cross-sectional view including a turning center axis of a movable arm.

Fig. 7 is a flowchart showing a process performed by a movement range limiting unit and an arm control unit.

Fig. 8A is a plan view showing an example of a candidate for a movement path of an end effector of the movable arm.

Fig. 8B is a cross-sectional view including the turning center axis of the movable arm.

Fig. 9A is a plan view showing an example of an entire movable range of the movable arm.

Fig. 9B is a cross-sectional view including the turning center axis of the movable arm.

Fig. 10 is a view showing an image displayed on a display unit of a robot according to another embodiment.

Fig. 11 is a block diagram of a system according to still another example.

Fig. 12 is a block diagram of a picking device according to a third embodiment.

Fig. 13A is a view showing CAD data defining a shape of a hexagon nut as an example of a target on a flat surface.

Fig. 13B is a view showing a plurality of reference points p located on a surface of a CAD model on a flat surface.

Fig. 14 is a schematic view showing a plurality of representative reference points $p\_i$.

Fig. 15 is a schematic view showing an example of coordinate transformation used in pre-learning.

Fig. 16 is a flowchart showing a procedure in which a position and posture estimation additional learning unit performs additional learning.

Fig. 17 is a flowchart showing a procedure in which a contact path determination reinforcement learning unit performs reinforcement learning.

Fig. 18 is a flowchart showing a procedure in which a contact path determination imitation learning unit performs imitation learning.

Fig. 19 is a view showing an example of figures and an image output to an output device during the imitation learning.

Fig. 20 is a flowchart showing an operation of the picking device in an additional learning operation mode.

Fig. 21 is a flowchart showing an operation of the picking device in a learning mode.

Description of Embodiments

(First Embodiment)

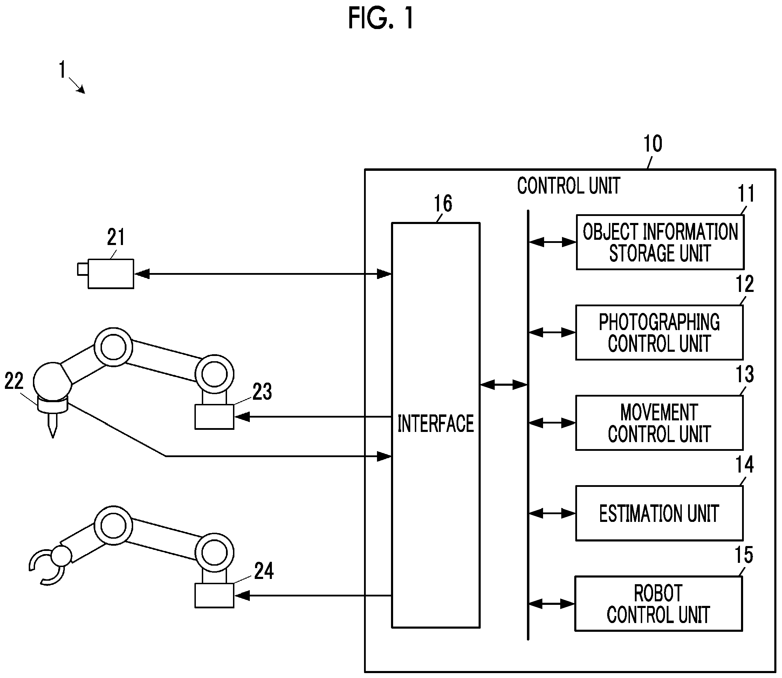

Hereinafter, a first embodiment of the present invention will be described in detail with reference to the drawings. Fig. 1 is a block diagram showing a picking device according to the first embodiment of the present invention. A picking device 1 according to the first embodiment is a device that estimates a posture of an object of which a shape and a size are known, and takes out the object from an accommodation location by grasping or the like. The picking device 1 includes a photographing unit 21 that acquires an image of the object, a force sensor 22 that can acquire detection information on a contact point by coming into contact with the object, a drive device 23 that moves the force sensor 22, a robot arm 24 as a take-out mechanism for grasping and transporting the object, and a control unit 10 that controls the above. The picking device 1 corresponds to an example of an information processing device according to the present invention.

The photographing unit 21 has an imaging element and an imaging lens, and acquires an image of a digital signal. The photographing unit 21 may acquire an image with which a rough position of the object can be identified. Alternatively, the photographing unit 21 may be a depth sensor that can obtain, in addition to a two-dimensional image, information on a depth of each point on the image.

The force sensor 22 acquires the detection information on the contact point when a contactor comes into contact with a certain surface. The detection information includes information on a position of the contact point and information indicating an orientation of a reaction force applied to the contactor from the contact point, that is, information on an orientation of a surface including the contact point (a normal to the surface). The force sensor 22 stops at a stage at which a very small reaction force is received and thus can acquire the detection information on the contact point without moving the contacting object.

The drive device 23 is a three-dimensional drive device capable of moving the force sensor 22 (specifically, the contactor thereof) along any path. The drive device 23 that moves the force sensor 22 and a drive unit of the robot arm 24 may be used in combination.

The control unit 10 is a computer including a central processing unit (CPU), a random access memory (RAM) in which the CPU deploys data, a storage device that stores control programs executed by the CPU, and an interface 16 that exchanges signals with the photographing unit 21, the force sensor 22, the drive device 23, and the robot arm 24. In the control unit 10, a plurality of functional modules are realized by the CPU executing the control programs. The plurality of functional modules include a photographing control unit 12 that controls the photographing unit 21, an object information storage unit 11 that stores object information indicating a shape and a size of an object, a movement control unit 13 that controls the drive device 23 to move the force sensor 22, an estimation unit 14 that estimates a posture of an object, and a robot control unit 15 that performs drive control of the robot arm 24.

For example, the object information includes position data (relative position data) of a plurality of points uniformly distributed on a surface of the object. The object information may include normal data of each point in addition to the position data of each point. The normal data indicates a direction of a normal perpendicular to a surface including each point and passing through the point. Alternatively, the normal data of each point may not be given in advance, and may be obtained by a calculation of the control unit 10 from position data of the plurality of points.

The estimation unit 14 estimates an approximate position of the object from the image acquired by the photographing unit 21. The estimation based on the image may be an estimation with relatively low accuracy such that the force sensor 22 can come into contact with any portion of the object. Although a specific method is not limited, for example, the estimation unit 14 can estimate a center point of the object or a point where the object is located with a large allowable error by performing image recognition processing from the image.

The estimation unit 14 further estimates a posture of the object based on the detection information on the contact point obtained by one or a plurality of contacts of the force sensor 22 with the object. Here, the posture of the object is a concept including the position and the orientation of the object, but the estimation of the posture according to the present invention may be an estimation of only the orientation. In a stage in which the number of contacts of the force sensor 22 is small and the posture of the object cannot be narrowed down to one, the estimation unit 14 estimates a plurality of candidates for the posture based on the detection information on the contact point. Then, each time the number of contacts of the force sensor 22 increases, the candidates for the posture are narrowed down, so that the estimation unit 14 can finally estimate one posture.

The movement control unit 13 determines a contact path in which the force sensor 22 comes into contact with the object so that the estimation unit 14 can efficiently estimate the posture of the object, and moves the force sensor 22 in the determined contact path. A method of determining the contact path will be described in detail later.

The robot control unit 15 drives the robot arm 24 based on the information on the posture of the object estimated by the estimation unit 14 so that the robot arm 24 grasps and transports the object in the posture.

<Method of Estimating Posture>

Subsequently, a specific example of a method of estimating the posture of the object by the estimation unit 14 will be described. The method of estimating the posture of the object by the estimation unit 14 is not limited to the following example. Here, a method of estimating the posture of the object, or a plurality of candidates for the posture by the estimation unit 14 using a cost function G(r,t) of Formula (1).
[Formula 1]

$$G(\boldsymbol{r},\boldsymbol{t}) = \sum_{k=1}^{K} \min_{m \in M} [\| \,^{r}\boldsymbol{p}_{c,k} - (\boldsymbol{R}(r)\boldsymbol{m} + \boldsymbol{t}) \|^{2} + w(1 - \langle \,^{r}\boldsymbol{f}_{k}, \boldsymbol{R}(r)\boldsymbol{n}_{m} \rangle)] \quad \cdots (1)$$

Each variable in the formula is as follows.

r: Rodrigues' rotation expression representing rotation
t: Vector representing translation
K: Total number of contacts at the time of estimation
k: Index of the number of contacts
M: Set indicating a plurality of points included in object information (hereinafter, referred to as "point group M")
m: Index and position representing each point included in point group M (object coordinate system)
$^{r}P_{c,k}$: Position of contact point (robot coordinate system)
R(r): Rotation matrix having r as an element

w: Adjustment coefficient

$^r f_k$: Direction of reaction force included in detection information of force sensor 22 (robot coordinate system) $n_m$: Direction of normal to point m (object coordinate system)

The robot coordinate system is a coordinate system based on a base portion of the robot arm 24, and means a coordinate system in which an origin and three axial directions of the coordinate system are fixed in a case where the base portion of the robot arm 24 does not move. The object coordinate system is a coordinate system based on an object, and means a coordinate system in which, when a position and an orientation of the object change, an origin and three axial directions of coordinates rotate and translate according to the change with respect to a reference coordinate system (for example, a coordinate system of the earth). A rotation r and a translation t are quantities that represent the position and the orientation of the object in the robot coordinate system. For example, a difference between the origin of the robot coordinate system and the origin of the object coordinate system may be represented by the translation t, and a difference in a rotation direction between the three axes of the robot coordinate system and the three axes of the object coordinate system may be represented by the rotation r.

The adjustment coefficient is a coefficient that adjusts the degree to which a first term and a second term in the square brackets on the right side of Formula (1) affect the cost function. The first term is an element that reduces the cost function when a point m close to a contact point is included in a point group M indicating a surface of the object and increases the cost function as a distance between a point m closest to a contact point in the point group M and the contact point increases. The second term is an element that reduces the cost function when there is a point m in the same normal direction as an orientation of a surface of a contact point in the point group M and increases the cost function as a difference between, to a point m having a normal closest to the orientation of the surface of the contact point, the normal and the orientation of the surface of the contact point increases. The absolute value symbol represents a length of a vector, and "<a,b>" represents an inner product of a vector a and a vector b. "min[]" indicates a minimum value among values in the square brackets at each point m. Therefore, a value in the summation symbol $\Sigma$ approaches zero in a case where a point close to a contact point is included in the point group M and a normal direction to the point is close to an orientation of a surface of the contact point, and becomes a value away from zero to a positive side when such a point is not included.

The estimation unit 14 searches for an argument (translation r,rotation t) at which a value of the cost function G(r,t) is a small value near zero, and estimates the searched rotation and translation {r,t} as the posture of the object or a candidate for the posture of the object.

<Estimation Procedure>

First, the estimation unit 14 sets an initial region for searching for the posture of the object based on the image obtained from the photographing unit 21 and the object information indicating the size and shape of the object. The initial region is set to a size with a margin such that a possibility that the object protrudes from the region is almost zero. For example, the estimation unit 14 obtains, based on a center point of the object obtained by image recognition of the image and the object information, a circumscribed sphere of the object of which a center is located at the center point, increases a diameter of the circumscribed sphere by an error corresponding to estimation accuracy of the image recognition, and sets an inside of the circumscribed sphere as the initial region.

Next, the estimation unit 14 sets all possible postures as positions and orientations of the object included in the initial region as initial candidates for the posture. Each posture is represented by a combination of a rotation r and a translation t. Therefore, the initial candidates for the posture are sets of combinations {r,t} of rotations and translations. However, when a very small difference in translation or rotation is regarded as another posture, the number of initial candidates for the posture becomes very large. Therefore, the estimation unit 14 appropriately sets a minimum translation difference $\Delta t$ and a minimum rotation difference $\Delta r$, and sets postures in which a difference in translation or rotation is equal to or more than the minimum difference $\Delta t$ or $\Delta r$ as different postures, and creates a set $I_0 = \{(r,t)_i, i = 1, 2, ...\}$ representing a plurality of initial candidates for the posture.

In a case where there is an element that restricts the posture of the object, such as a table on which the object is placed, the estimation unit 14 may perform a process of excluding candidates for the posture that cannot be generated by the restriction from the plurality of initial candidates for the posture (set $I_0$). Since the number of candidates is reduced by this process, a calculation load of the subsequent estimation process can be reduced, and it is possible to narrow down the candidates to one with less number of contacts. The following shows an example in which this exclusion is not performed.

When a first contact of the force sensor 22 is performed, detection information indicating a position of the contact point and a direction of a reaction force (an orientation of a surface including the contact point) is transmitted to the estimation unit 14. The estimation unit 14 applies this information to calculate the cost function G(r,t) for all the elements of the set $I_0 = \{(r,t)i, i = 1, 2, ...\}$. Then, elements of the set $I_0$ in which the cost function G(r,t) is equal to or less than a threshold near zero are extracted as the candidates for the posture. In a case where the candidates for the posture include only a series of elements that fall within a certain width corresponding to the threshold, the element that minimizes the cost function G from among the series of elements is extracted as a final estimation result of the posture of the object. The series of elements means a plurality of elements that are continuous with the minimum translation difference $\Delta t$ or the minimum rotation difference $\Delta r$. On the other hand, in a case where the candidates for the posture are not only the series of elements, this means that a plurality of candidates for the posture remain. Therefore, the estimation unit 14 continues the estimation process and waits for the next contact of the force sensor 22.

When the next contact of the force sensor 22 is performed, the estimation unit 14 performs the same process as in the case of the first contact (a similar process in which the initial candidates are replaced by the candidates for the posture narrowed down in the first contact) to further narrow down the candidates for the posture of the object. Then, by repeating this process, the estimation unit 14 can obtain the posture of the object narrowed down to one as the final estimation result.

<Conditions for Contact Path>

During the estimation process by the estimation unit 14, the movement control unit 13 calculates a path in which the force sensor 22 (specifically the contactor) is to move from any position in any orientation to come into contact with the object as a contact path before bringing the force sensor 22 into contact with the object. The contact path is determined based on the following first to third contact conditions.

The first contact condition is a condition in which, in a case of a plurality of contacts, a surface different from the surface that has been previously contacted is contacted. The different surface in the object means each surface that is divided with a peak portion or a V-groove portion included in the object as a boundary. In the case of an object having no curved surface, each flat surface becomes a different surface. The contact path according to the first contact condition may be determined as a path that proceeds in a direction intersecting (for example, orthogonal to) the normal to the contact point detected in the previous contact.

Alternatively, the contact path according to the first contact condition may be determined as a path that proceeds toward a portion where there is a high possibility that a previously uncontacted surface is located in a direction intersecting the surface based on the candidates for the posture of the object estimated at the current stage by the estimation unit 14.

The second contact condition is a condition in which, in a case where the object has an asymmetric portion, the asymmetric portion is contacted with a high probability. The asymmetric portion of the object means, for example, a portion with a low degree of point symmetry, axis symmetry, or plane symmetry with respect to a center point, a center axis, or a center plane of the object. For example, in the case of a bolt, a head portion side edge portion and a shaft end portion correspond to the asymmetric portion. In addition, in the case of a pin member in which a diameter of a predetermined portion excluding a center in a longitudinal direction is reduced, the predetermined portion corresponds to the asymmetric portion. Such an asymmetric portion may be obtained by a calculation by the movement control unit 13 from the above-described object information, or may be included in the object information in advance.

A contact path according to the second contact condition can be obtained from, in a stage where a contact with the object has not yet been performed, the posture estimated by the estimation unit 14 based on the image obtained by the photographing of the photographing unit 21 and information on the asymmetric surface.

The contact path according to the second contact condition can be obtained by, in a stage where one or a plurality of contacts are performed, calculating a portion where there is a high possibility that the asymmetric portion is located based on a plurality of candidates for the posture estimated at the current stage and defining a path toward the portion.

The third contact condition is a condition in which, in a stage where one or a plurality of contacts are performed, a surface having a high degree of uncertainty in the position of the surface of the object is contacted among the plurality of candidates for the posture obtained by the estimation of the estimation unit 14.

The surface having a high degree of uncertainty in the position is not particularly limited, and may be obtained, for example, as follows. That is, first, the movement control unit 13 calculates a distance between the center point of the object estimated from the image and each point included in the point groups M of the plurality of candidates for the posture, and selects n representative points where the distances are long and dispersed. Then, the movement control unit 13 sets cylinders having the same shape and the same volume centered on respective normals as center axes to the selected n representative points as local regions. Furthermore, the movement control unit 13 extracts all the points included in each local region from all the point groups M included in the plurality of candidates for the posture, and calculates an average and a variance of axial positions (in directions along the center axes of the cylinders) of the points. Then, the movement control unit 13 obtains a local region having a large variance from the n local regions as a portion having a high degree of uncertainty in the position of the surface and obtains a surface included in the local region as a surface having a high degree of uncertainty in the position of the surface.

In the above example, the n local regions are set based on the n representative points with large distances from the center point of the object estimated from the image, but the method of setting n local regions is not limited to the above example. For example, n representative points randomly selected, and n presentative points isotropically dispersed may be set as the n local regions. In addition, in the above example, although the cylindrical regions are set as the local regions and the dispersion of the axial positions of all the points included in the local regions are calculated, the local region may have any shape, such as a spherical region, and the dispersion is not limited to the dispersion of the axial positions, and a direction of the dispersion is not limited. For example, the dispersion may be a dispersion of a plurality of points included in the local region from a center position. In addition, in the above example, although the variance of the points included in each local region is obtained, various methods can be adopted as the method of obtaining the degree of uncertainty. For example, a distance between two points that are farthest apart in the axial direction in each local region may be calculated, and a region where the distance between the two points is large may be obtained as a region including a surface having a high degree of uncertainty. In addition, in the above example, although a plurality of local regions are set and a region including a surface having a high degree of uncertainty is obtained by comparing values indicating the uncertainty between the local regions, any method can be adopted as long as a point including a surface having a high degree of uncertainty is obtained. For example, without setting local regions, portions having a high degree of scattering in all the point groups M of the plurality of candidates for the posture may be obtained as a portion including a surface having a high degree of uncertainty.

A direction of a contact path according to the third contact condition may be calculated as a path that proceeds toward the portion including the surface having a high degree of uncertainty obtained as described above in a direction intersecting the surface included in the portion. The direction may be a normal direction to a representative point included in a local region having a high degree of uncertainty, or a direction (such as an average direction) calculated from normal directions to all the points included in the local region.

<Method of Determining Contact Path>

A number of contact paths satisfying all of the above-described first to third contact conditions may be obtained. Alternatively, a contact path that is compatible with any one or two of the first to third contact conditions but is not compatible with the other contact conditions may be obtained. Therefore, the movement control unit 13 appropriately selects one contact path from the contact paths obtained based on the first to third contact conditions, and determines the selected contact path as the next contact path to move the force sensor 22.

A method of selecting one contact path may be, for example, a method of assigning a priority to each contact path and selecting a contact path with a high priority. The priority may be a different value for the first to third contact conditions, or may be a value obtained by multiplying this value by a possibility (probability) that meets each contact condition. Alternatively, the method of selecting one contact path may be any method such as a random selection.

In the above example, although the movement control unit 13 determines the contact path based on all of the first to third contact conditions, the movement control unit 13 may omit one or two contact conditions and determine the contact path from the remaining two or one contact condition.

<Picking Process>

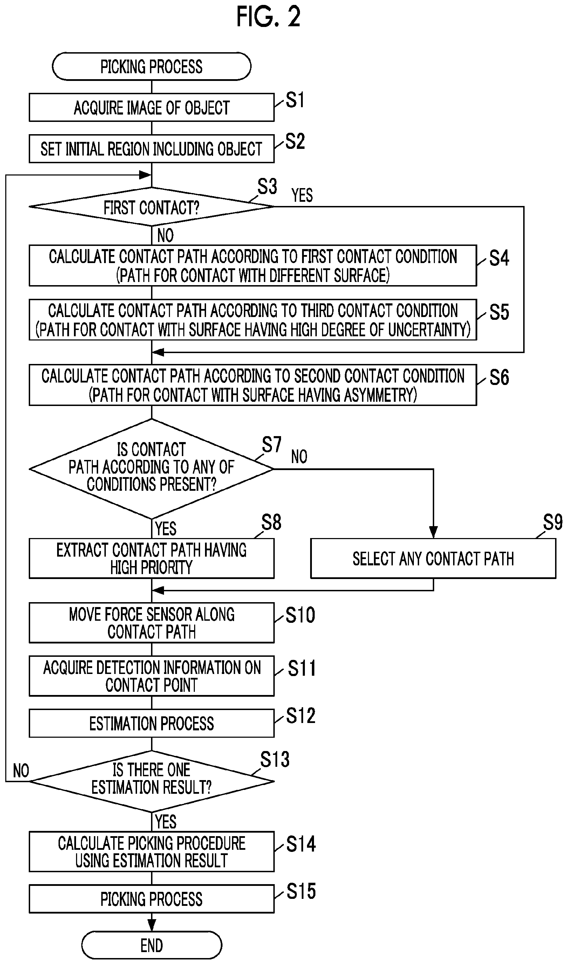

Fig. 2 is a flowchart showing an example of a procedure of a picking process performed by the control unit 10. Picking means taking out an object. The picking process of Fig. 2 is started in a state where the object to be picked is included in an angle of view of the photographing unit 21.

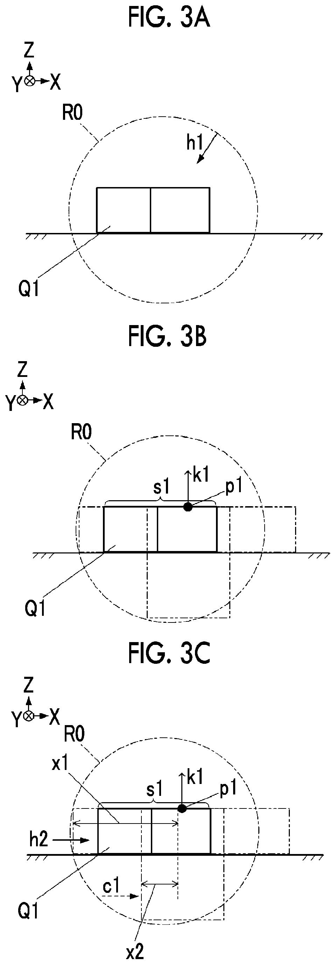

When the picking process is started, first, the photographing control unit 12 acquires an image through the photographing unit 21 and transmits the obtained image to the estimation unit 14 (step S1). The estimation unit 14 estimates a center position of the object by performing image recognition processing from the image, and sets an initial region R0 (see Fig. 3A) described above, in which the object is included with a margin from the center position and object information (step S2).

When the initial region R0 is set, the control unit 10 allows the process to proceed to a loop (steps S3 to S13) to narrow down the candidates for the posture of the object through contacts with the object. That is, the movement control unit 13 determines whether or not the contact is the first contact (step S3), and when the contact is the first contact, the movement control unit 13 calculates a contact path that meets the second contact condition (a contact with a high possibility that an asymmetric portion is contacted), and performs a process of assigning a priority to the contact path (step S6). The contact path is calculated from candidates for the posture of the object estimated at that time and calculation results of a portion of the object having asymmetry calculated from the object information as a path that proceeds toward a surface located at the portion in a direction intersecting the surface. The priority assigned to the calculated contact path may be a value preset for the second contact condition to distinguish between priorities of the first to third contact conditions. Alternatively, the priority may be a value obtained by multiplying a value preset for the second contact condition by a value (for example, probability) indicating a possibility that the contact path meets the contact condition.

On the other hand, when it is determined in the determination process in step S3 that the contact is the second or later contact, the movement control unit 13 calculates a contact path that meets the first contact condition (a contact with a surface different from the previously contacted surface) based on a candidate for the posture of the object estimated at that time (step S4). In addition, the movement control unit 13 performs a process of assigning a priority to the contact path (step S4). As for the contact path, if there are j candidates for the posture, a surface that is estimated to have not been contacted in the previous contacts is extracted for each candidate, and the contact path is calculated as a path that proceeds toward one or a plurality of points in the surface in a normal direction associated with the point. A direction of the contact path may be calculated as a direction intersecting a normal to the surface previously contacted. The priority assigned to the contact path may be a value preset for the first contact condition in order to distinguish between priorities of the first to third contact conditions. Alternatively, the priority may be a value obtained by multiplying a value preset for the first contact condition by a value (for example, probability) indicating a possibility that the contact path meets the contact condition.

Subsequently, the movement control unit 13 calculates a contact path that meets the third contact condition (a contact with a surface having a high degree of uncertainty in position) based on a candidate for the posture of the object estimated at that time, and further performs a process of assigning a priority to the contact path (step S5). A method of obtaining the contact path is as described above. The priority may be a value preset for the third contact condition in order to distinguish between priorities of the first to third contact conditions. Alternatively, the priority may be a value obtained by multiplying a value preset for the third contact condition by a value (for example, probability) indicating a possibility that the path meets the contact condition. After the calculation in step S5 is ended, the movement control unit 13 performs the calculation of the contact path and the process of assigning the priority in step S6 described above.

Then, the movement control unit 13 determines whether or not the contact path has been obtained (step S7), and in a case of YES, extracts the contact path having a high priority from the calculated contact paths (step S8). At the time of the extraction, the movement control unit 13 determines whether or not a plurality of the calculated contact paths can be aggregated as a path that simultaneously satisfies a plurality of the contact conditions, and in a case where the calculated contact paths can be aggregated, the priorities of the plurality of contact paths are added up, and the calculated contact paths may be treated as one contact path to which the priority of the addition result is assigned.

On the other hand, when the determination result in step S7 is NO, the movement control unit 13 calculates any contact path in which the force sensor 22 can come into contact with the object (step S9). For example, the movement control unit 13 calculates a contact path from any point on a spherical surface of the initial region R0 (Fig. 3A) toward the center.

When the contact path is determined, the movement control unit 13 moves the force sensor 22 along the contact path to bring the force sensor 22 (contactor thereof) into contact with the object (step S10). The contact is a weak contact that does not move the object. Then, the estimation unit 14 acquires information on the position of the contact point and the orientation of the surface from the force sensor 22 (step S11), and performs a process of estimating the posture of the object (step S12). The estimation process is performed using the cost function $G(r,t)$ as described above.

When an estimation result of the posture of the object is obtained, the estimation unit 14 determines whether or not the posture is narrowed down to one (step S13), and in a case of NO, returns the process to step S3. On the other hand, when the posture is narrowed down to one, the control unit 10 exits the loop (steps S3 to S13) for estimating the posture, and proceeds to the next step of the process.

After exiting the loop, the robot control unit 15 calculates the position and orientation of the object and an operation procedure for grasping the object with the robot arm 24 based on the estimated posture of the object (parameters $\{r,t\}$ indicating rotation and translation) (step S14). Then, the robot control unit 15 drives the robot arm 24 by the calculated procedural operation and takes out the object (step S15). Then, one picking process is ended.

<First Example of Process of Estimating Posture>

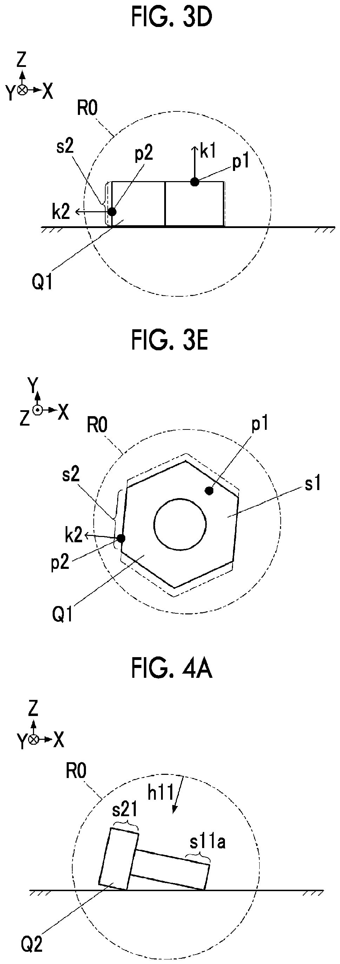

Subsequently, a specific example of the process of estimating the posture of the object performed during the picking process will be described. Figs. 3A to 3D are explanatory views of first to fourth steps for describing the first example of the estimation process. Fig. 3E is an explanatory view showing the fourth step at another angle. In the first example, an object Q1 for which the posture is estimated is a nut and is placed on a table.

Fig. 3A shows an initial stage in which the force sensor 22 has not made a single contact with the object Q1. At this stage, the estimation unit 14 sets the initial region R0 based on the image in step S2, and the movement control unit 13 obtains a surface of a portion having asymmetry from outer surfaces of the object Q1 based on information on the object Q1 and calculates a contact path h1 in step S6. In the case of a nut, the degree of rotational symmetry about a center axis of a threaded hole is equal to or less than a threshold, and an outer peripheral surface of the nut is calculated as a surface of a portion having asymmetry. On the other hand, in the first example, since estimation accuracy of the posture based on the image is low, a path in which the force sensor 22 comes into contact with the surface having asymmetry cannot be calculated, and the movement control unit 13 calculates a certain contact path h1 in step S9. The certain selected contact path h1 may be a path directed from a point in the outer peripheral surface of the spherical initial region R0 toward the center of the initial region R0.

Fig. 3B shows a stage in which, after the force sensor 22 has moved along the contact path h1, the posture of the object Q1 is estimated based on the first contact in steps S10 to S12. By the contact, a position of a contact point p1 and an orientation (normal k1) of a surface s1 including the contact point p1 are detected, and the estimation unit 14 narrows down candidates for a translation t and a rotation r with which the cost function G(r,t) approaches zero, using the detection information. In Fig. 3B, a range including the narrowed down candidates for the posture is indicated by two-dot chain lines. In the range of the two-dot chain lines, all postures in which the contact point p1 corresponds to a point on any surface of the object Q1, and the surface including the point is perpendicular to the normal k1 are included. The estimation unit 14 obtains a large number of postures occupying the range as the candidates. In addition, a candidate in which the object Q1 protrudes from the initial region R0 may be excluded from the candidates for the posture of the object Q1, but Figs. 3A to E show examples in which the candidate is not excluded.

Fig. 3C shows a stage in which a contact path h2 of a second contact is calculated in steps S4 to S8. In this stage, the movement control unit 13 calculates a contact path according to the first contact condition, a contact path according to the second contact condition, and a contact path according to the third contact condition based on the candidates (indicated by the two-dot chain lines) for the posture of the object Q1 obtained by the previous contact, and extracts the contact path h2 having a high priority from the calculation. Since the contact path h2 is a path that proceeds in a direction intersecting the normal to the first contact surface s1, there is a high possibility that the force sensor comes into contact with a surface different from the first contact surface s1, and furthermore, a possibility that the contacting surface is the outer peripheral surface of the nut having asymmetry is higher than in another contact path c1, for example. Moreover, in the candidates for the posture of the object Q1, surfaces having a possibility of intersecting the contact path h2 are dispersed in a wide range X1, and surfaces having a possibility of intersecting the other contact path c1 are dispersed in a narrow range X2. Therefore, the contact path h2 is calculated as a path having a high possibility of coming into contact with a surface having a high degree of uncertainty in position.

Figs. 3D and 3E show a stage in which, after the force sensor 22 moves along the contact path h2, the posture of the object Q1 is estimated based on the second contact in steps S10 to S12. By the second contact, a position of a contact point p2 and an orientation (normal k2) of a surface s2 including the contact point p2 are detected, and the estimation unit 14 narrows down candidates for the translation t and the rotation r with which the cost function G(r,t) approaches zero, using the detection information obtained in the first and second contacts. As indicated by two-dot chain lines in a plan view of Fig. 3E, a plurality of candidates for the posture (indicated by the two-dot chain lines in Fig. 3E) in which the contact points p1 and p2 are included in the two surfaces s1 and s2 of the object Q1 and the nut is deviated in a direction parallel to both the surfaces s1 and s2 are narrowed down by the second contact.

As the number of contacts increases in this manner, the candidates for the posture of the object Q1 are narrowed down, and the estimation unit 14 can finally estimate one posture of the object Q1.

<Second Example of Process of Estimating Posture>

Figs. 4A to 4F are explanatory views of first to sixth steps for describing a second example of the process of estimating the posture of the object. The second example shows an example in which an object Q2 for which a posture is estimated is a bolt.

In Fig. 4A, in an initial stage in which the force sensor 22 has not made a single contact with the object Q2, the estimation unit 14 sets an initial region R0 based on an image (step S2), and the movement control unit 13 obtains a surface having asymmetry from outer surfaces of the object Q2 based on information on the object Q2 and calculates a contact path h11 so as to meet the second contact condition (step S6). In the case of a bolt, the degree of symmetry of plane symmetry with respect to a center plane that divides the bolt into two parts in an axial direction is equal to or less than a threshold, and a side surface s21 of a bolt head portion and a side surface s11a of a bolt shaft end portion are obtained as surfaces of portions having asymmetry. On the other hand, in the example of Fig. 4A, since initial estimation accuracy of a posture of the object Q2 based on the image is low, the contact path h11 toward a side surface at a center of a shaft portion deviating from the surface having asymmetry is calculated.

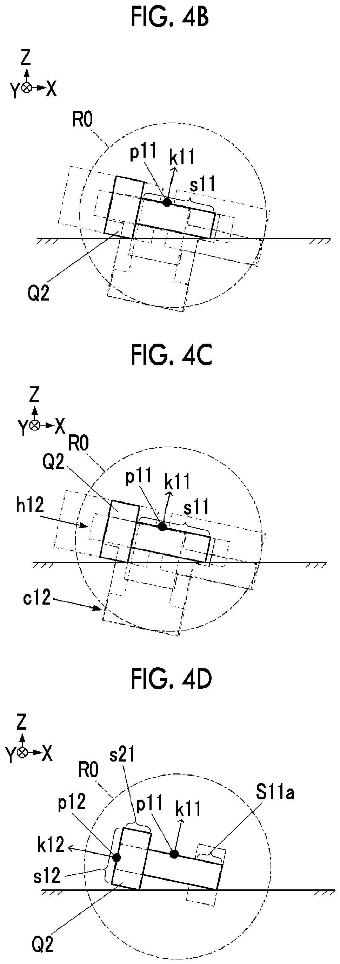

In Fig. 4B, the force sensor 22 moves along the contact path h11 (step S10), detection by the first contact is performed (step S11), and estimation of the posture of the object Q2 based on the detection is performed (step S12). By the contact, a contact point p11 and an orientation (normal k11) of a surface s11 including the contact point p11 are detected, and the estimation unit 14 searches for a plurality of candidates for the posture of the object Q2 by calculating the cost function G(r,t) using the detection information. Here, in the narrowed down candidates for the posture, as indicated by two-dot chain lines in Fig. 4B, all postures in which the surface s11 and the contact point p11 become a head portion side surface, a head portion upper surface, a shaft portion end surface, or a shaft portion side surface of the bolt, and any point thereof are included. In addition, a candidate in which the object Q2 protrudes from the initial region R0 may be excluded from the candidates for the posture of the object Q2, but Figs. 4A to 4F show examples in which the candidate is not excluded.

In Fig. 4C, the movement control unit 13 calculates a contact path h12 having a high priority based on the first to third contact conditions (steps S4 to S8). The contact path h12 is a path that realizes a contact with a surface different from the surface s11 on which the first contact is performed, and realizes a contact with a surface having a high degree of uncertainty in position. For example, in the candidates (indicated by two-dot chain lines) for the posture of the object Q2, surfaces having a possibility of intersecting the contact path h12 are dispersed over a length of a shaft portion of the bolt, and surfaces having a possibility of intersecting another contact path c12 are dispersed by a width of the head portion of the bolt, so that the former has a larger variance and a higher degree of uncertainty.

Then, as shown in Fig. 4D, by performing the second contact (step S10), a contact point p12 and an orientation (normal k12) of a surface s12 including the contact point p12 are detected (step S11), and the estimation unit 14 further narrows down the candidates for the posture of the object Q2 based on the detection result (step S12). As indicated by two-dot chain lines in Fig. 4D, the candidates are narrowed down to two postures in which the head portion and the shaft end portion of the bolt are reversed by the second contact. In addition, in a case where the first contact is performed on the head portion side surface s21 or the shaft end portion side surface sila of the bolt having asymmetry, the estimation unit 14 can narrow down the candidates to one posture of the object Q2 in the stage of the second contact.

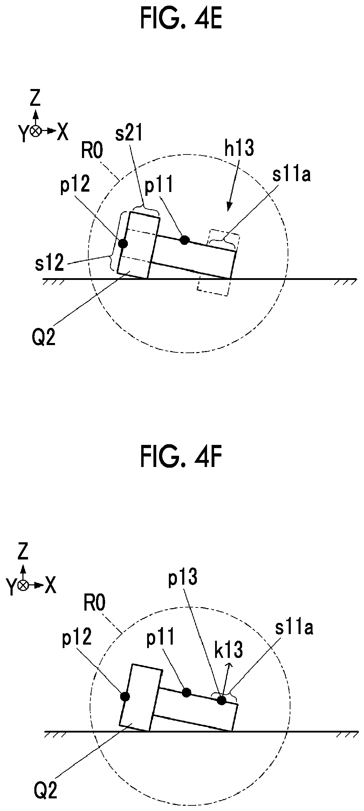

In Fig. 4E, the movement control unit 13 calculates a contact path h13 having a high possibility of realizing the first to third contact conditions (steps S4 to S8). In the candidates for the posture at this time, the head portion side surface s21 or the shaft end portion side surface sila of the bolt is a surface having a high degree of uncertainty in position, and the head portion side surface s21 and the shaft end portion side surface sila of the bolt are surfaces of portions having asymmetry. Therefore, the contact path h13 is a path according to the second contact condition and the third contact condition. Furthermore, the contact path h13 is a path having a possibility of coming into contact with a surface (bolt head portion side surface s21) different from the first contact surface s11 and the second contact surface s12, and may also be a path according to the first contact condition. The contact path h13 actually comes into contact with the shaft end portion side surface s11a which is the same surface as the first contact surface s11, but has a possibility of coming into contact with the bolt head portion side surface s21 of about 50% for the candidates for the posture estimated at this stage.

Then, as shown in Fig. 4F, when the third contact is performed (step S10), a contact point p13 and an orientation of the surface s11a including the contact point p13 are detected (step S11), and the candidates for the posture of the object Q2 are narrowed down to one using the detection result (step S12).

As described above, according to the picking device 1 of the first embodiment, the estimation unit 14 estimates the posture of the object based on the detection information obtained by a plurality of contacts of the force sensor 22 with the object, and the object information. Therefore, it is possible to estimate a posture of an object even if the object is covered with cloth or the like, transparent or black, or has a mirror surface, and thus has a posture that cannot be easily estimated only by an image.

Moreover, according to the picking device 1 of the first embodiment, the movement control unit 13 calculates the contact path of the force sensor 22 so that a plurality of contacts of the force sensor 22 with the object are performed on different surfaces of the object. Therefore, the estimation unit 14 can narrow down the candidates for the posture of the object to a smaller number of candidates by using the detection information from a small number of contacts, and can realize highly efficient posture estimation.

Furthermore, according to the picking device 1 of the first embodiment, the information on the position of the contact point and the information on the orientation of the surface including the contact point are acquired as the detection information by the contact of the force sensor 22. In addition, at the time of an n-th contact, the movement control unit 13 calculates a contact path in which the force sensor 22 is moved in a direction intersecting normals to surfaces of contact points on which contacts are performed before the n-th contact. According to the method of determining the direction in which the contact path proceeds, the movement control unit 13 can calculate the contact path of the force sensor 22 so that a plurality of contacts of the force sensor 22 with the object are performed on different surfaces of the object.

Moreover, according to the picking device 1 of the first embodiment, the movement control unit 13 calculates a contact path (contact path according to the third contact condition) having a high possibility of coming into contact with a surface having a high degree of uncertainty in position from among a plurality of candidates for the posture of the object that are being narrowed down at that time. Therefore, based on the detection information obtained by the movement of the force sensor 22 along the contact path, the estimation unit 14 can narrow down the candidates for the posture of the object to a smaller number of candidates. Therefore, the estimation unit 14 can narrow down the posture of the object to one by using the detection information from a small number of contacts, and can realize highly efficient posture estimation.

Furthermore, according to the picking device 1 of the first embodiment, the movement control unit 13 calculates a contact path (contact path according to the second contact condition) so that a surface of an asymmetric portion of the object is contacted. Therefore, the orientation of the object can be efficiently specified based on the detection information of an asymmetric surface of the object obtained by the movement of the force sensor 22 along the contact path. Therefore, the estimation unit 14 can narrow down the posture of the object to one by using the detection information from a small number of contacts, and can realize highly efficient posture estimation.

Furthermore, according to the picking device 1 of the first embodiment, the photographing unit 21 that acquires an image of an object is provided, and the estimation unit 14 estimates a rough position of the object based on the image acquired by the photographing unit 21, and allows the first contact. That is, the estimation unit 14 estimates a position where the force sensor 22 can come into contact with the object based on the image. Therefore, even when the position of the object is unknown in a wide range, the position where the force sensor 22 comes into contact with the object can be estimated from the image, and the posture of the object can be estimated by the contact. Therefore, the object can be taken out even when the position of the object is unknown in a wide range.

The first embodiment of the present invention has been described above. However, the present invention is not limited to the above-described first embodiment. For example, in the first embodiment above, the method of estimating the posture of the object using information on the point group M uniformly distributed on the outer surface of the object and the cost function G(r,t) has been described. However, estimation of the posture of the object is not limited to the above method, and any method may be adopted as long as the posture of the object can be estimated from the information detected by the contact. In addition, as described above, in the first embodiment, an example is shown in which the process of estimating the posture is performed without considering the presence of an element that restricts the posture of the object, such as a table on which the object is placed. However, in a case where there is an element that restricts the posture of the object, for example, a process of excluding a candidate for the posture that is incompatible with the element may be added.

In addition, in the first embodiment, an example is shown in which the object information storage unit 11 (a storage unit that stores object information indicating a shape and a size of an object) is located inside the device. However, the object information storage unit 11 may be provided in a server computer connected via a communication network, and the object information may be transmitted to the device via communication. In addition, in the first embodiment above, an example is shown in which the present invention is applied to the picking device 1 that takes out an object from a shelf or the like. However, the information processing device of the present invention may not perform control and an operation for taking out an object, and is applicable to various devices that estimate a posture of an object. In addition, details shown in the embodiment can be appropriately changed without departing from the gist of the invention.

(Second Embodiment)

When a robot having a movable arm, such as an industrial robot or a cooperative robot, is used to automate a work performed by a human, it is necessary to teach an operation to be performed by the robot. The robot performs imitation learning based on the taught operation. For example, a deep learning model is constructed based on the taught operation (refer to Japanese Unexamined Patent Publication No. 2020-110920). The robot determines an operation plan of the movable arm, for example, an operation path of a tip of the movable arm based on a constructed deep learning model, and operates the movable arm based on the determined operation path. Accordingly, the taught operation can be reproduced.

When a situation that was not expected at the time of teaching occurs, there is a possibility that the movable arm performs an unexpected operation. For example, in a case where the movable arm is stopped urgently for some reason and resumes the operation from the stopped position, there is a possibility that the movable arm performs an unexpected operation. For example, in a case where operation data before the stop of the movable arm is lost and a starting point at the time of restart tries to move from a different start from the position at the time of the stop, or in a case where an operation before a return is stopped and a return to an origin is performed, there are cases where the movable arm operates along an unintended path. In addition, in a case where a movement path of the movable arm of the robot is generated by machine learning such as imitation learning, an unintended movement path may be generated when an input different from a taught input is given. For example, in a robot that has learned to generate a movement path B from an image including a target A, when an image including a target C different from the taught target A is input, there are cases where a movable arm moves along an unintended path (for example, refer to S. Levine et. al., End-to-End Trading of Deep Visuomotor Policies, 2016). Even in a case where the movable arm performs an unexpected operation, in order to avoid a risk that the movable arm collides with a worker or another device, it is preferable to set a possible range of movement of the movable arm as an off-limit range. Furthermore, it is preferable not to install other devices within this range. For this reason, an efficiency of using a space in a factory is lowered.

In a second embodiment, a robot control device and a system capable of avoiding a danger even when a situation unexpected at the time of teaching occurs without causing a decrease in space utilization efficiency are provided.

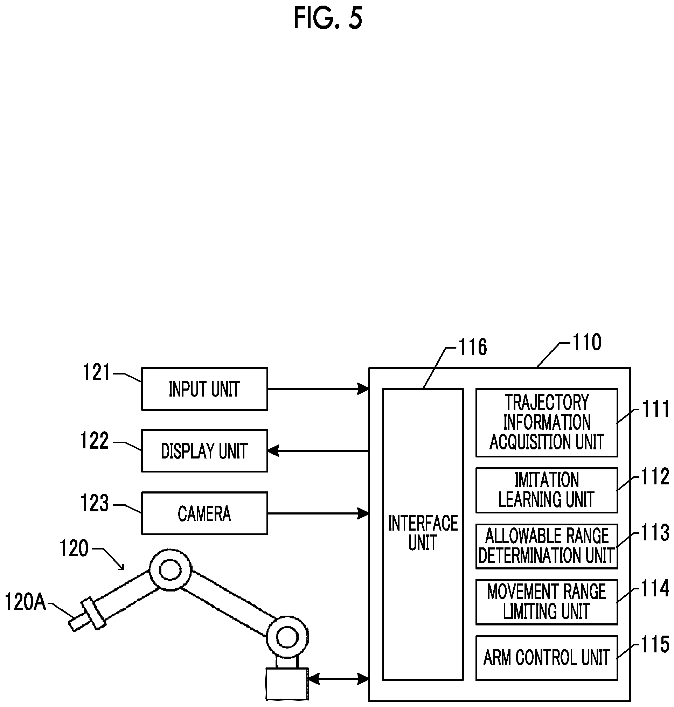

The robot control device according to the second embodiment of the present invention will be described with reference to Figs. 5 to 9B. The robot control device corresponds to an example of the information processing device according to the present invention.

Fig. 5 is a block diagram showing a function of a control device 110 according to the second embodiment. The control device 110 according to the second embodiment controls an operation of a movable arm 120. The movable arm 120 is, for example, an articulated robot arm having 6 degrees of freedom, and performs a picking operation of taking out a workpiece, for example, a bolt from an accommodation location and transporting the workpiece to a predetermined position. The robot further includes an input unit 121, a display unit 122, and a camera 123.

The control device 110 includes a trajectory information acquisition unit 111, an imitation learning unit 112, an allowable range determination unit 113, a movement range limiting unit 114, an arm control unit 115, and an interface unit 116. Functions of the trajectory information acquisition unit 111, the imitation learning unit 112, the allowable range determination unit 113, the movement range limiting unit 114, and the arm control unit 115 are realized, for example, by executing a program by a central processing unit (CPU). The interface unit 116 has a function of inputting/outputting data or a command between the movable arm 120, the input unit 121, the display unit 122, the camera 123, and the like, and the control device 110.

A motor is provided at each joint portion of the movable arm 120. The movable arm 120 is operated by the motor of the joint portion driven by the control device 110. In addition, each joint portion is provided with an encoder that detects a rotation angle of the motor and a torque sensor that detects a torque generated in the joint portion. Detection results of the encoder and the torque sensor are input to the control device 110.

An end effector (acting portion) 120A is attached to a tip of the movable arm 120. The end effector 120A can grasp the workpiece. A machining tool or the like may be attached as the end effector 120A.

The input unit 121 is an operation device for the worker to operate the movable arm 120 during a teaching work, and is called a teaching pendant. It is also possible for the worker to directly operate the movable arm 120 to perform the teaching work. Such a teaching method is called direct teaching. The input unit 121 may include a keyboard, a pointing device, or the like in addition to the operation device.

The display unit 122 displays the taught information, an allowable range in which the movable arm 120 is allowed to move, and the like in the form of figures under the control of the control device 110.

The camera 123 images the movable arm 120 and the accommodation location of the workpiece which is a target to be picked up. The imaged image data is input to the control device 110.

Next, the function of each unit of the control device 110 will be described.

The trajectory information acquisition unit 111 acquires trajectory information indicating a movement trajectory of the movable arm 120 given by the teaching. The acquired trajectory information includes information indicating a movement trajectory of each of a plurality of the joints and the end effector 120A. For example, for teaching an operation, a method in which the worker directly moves the movable arm 120 (direct teaching), a method of teaching a movement of each axis of the movable arm 120 one by one, and a remote teaching method can be adopted. A position of each joint of the movable arm 120 or the end effector 120A during the teaching can be obtained from a detection result of an angle sensor attached to each joint portion.

The imitation learning unit 112 stores an image of the workpiece imaged by an imaging device in association with the movement trajectory of the movable arm 120 given by the teaching, and performs machine learning. As the machine learning, for example, a deep learning method using a neural network can be used. The imitation learning unit 112 stores a result of machine learning as teaching data. In addition, instead of the image of the workpiece imaged by the imaging device, detection results of the workpiece by various sensors such as a lidar scanner, a range camera, and a millimeter-wave sensor may be stored in association with the movement trajectory of the movable arm 120 given by the teaching to perform the machine learning.

The allowable range determination unit 113 determines an allowable movement range of the movable arm 120 from the trajectory information acquired by the trajectory information acquisition unit 111. The allowable movement range is determined, for example, based on a convex hull of a set of movement trajectories of the plurality of joints and the end effector 120A given during the teaching. The convex hull is a smallest convex set including a given set. In the second embodiment, the "given set" corresponds to a point set representing the trajectories of the plurality of joints and the end effector 120A of the movable arm 120. The allowable range determination unit 113 automatically determines the allowable movement range from the set of a plurality of the movement trajectories by applying an algorithm for obtaining a convex hull including this set. Here, the term "automatically determines" means that the determination is made without the intervention of a user.

As an example, the allowable movement range is determined so as to coincide with the convex hull of the movement trajectories of the movable arm 120. Alternatively, the allowable movement range may be determined to include the convex hull of the movement trajectories of the movable arm 120. For example, a surface moved outward from a surface of the convex hull by a predetermined distance may be set as a surface of the allowable movement range. In addition, the allowable movement range may be defined by at least one primitive figure disposed so as to include the set of movement trajectories given during the teaching. Examples of the primitive figure include a cube, a cuboid, a sphere, and a cylinder. The allowable range determination unit 113 automatically determines an allowable movement range from the set of the plurality of movement trajectories by applying an algorithm for determining the allowable movement range including at least one primitive figure including this set.

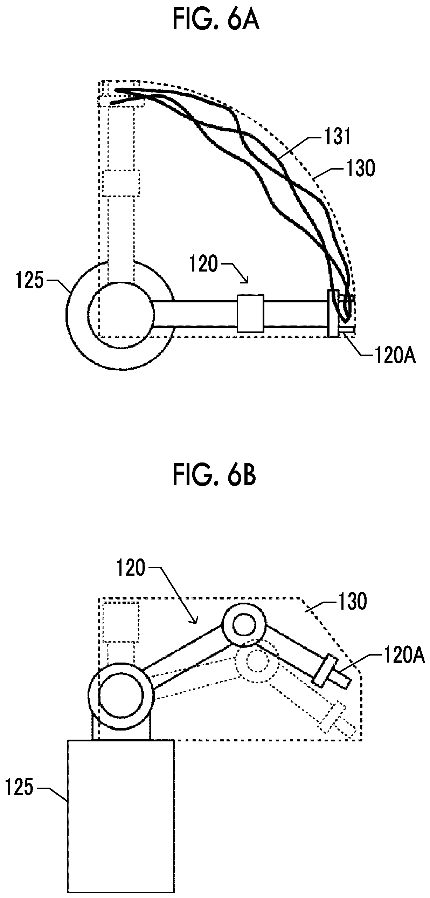

Fig. 6A is a plan view showing an example of the allowable movement range, and Fig. 6B is a cross-sectional view including a turning center axis of the movable arm 120. A base portion of the movable arm 120 is attached to a base stage 125. The movable arm 120 turns around the turning center axis fixed to the base stage 125. Furthermore, the movable arm 120 bends and stretches with reference to the base stage 125, thereby changing the posture in a three-dimensional space. An example of a movement trajectory 131 of the end effector 120A during the teaching is indicated by a curve in Fig. 6A.

The allowable movement range 130 is determined based on a convex hull of the movement trajectory 131 of the end effector 120A during the teaching and the movement trajectories of the other joints. As shown in Fig. 6A, for example, a shape of the allowable movement range 130 in a plan view is a fan shape having a center angle in the vicinity of the turning center. As shown in Fig. 6B, for example, a shape of a vertical cross section thereof is a pentagon obtained by cutting off one corner of a rectangle having sides parallel to a horizontal direction and a vertical direction into a triangular shape. The corner cut off into the triangular shape is a corner at a position diagonal to the base portion of the movable arm 120. The shape of the allowable movement range 130 shown in Figs. 6A and 6B is an example, and the allowable movement range 130 can have various other shapes.

The allowable range determination unit 113 (Fig. 5) displays the determined allowable movement range 130 and the movable arm 120 on the display unit 122 in the form of figures so that a positional relationship between the two can be recognized. The worker can obtain information on the position, shape, and size of the currently set allowable movement range 130 by looking at the display unit 122.

The movement range limiting unit 114 determines the movement path of the movable arm 120 based on the image data acquired by the camera 123 and the result of the imitation learning. The arm control unit 115 operates the movable arm 120 along the movement path determined by the movement range limiting unit 114. More specifically, the rotation angle of the motor that drives each joint of the movable arm 120 is obtained from coordinates on the movement path, and each motor is driven.

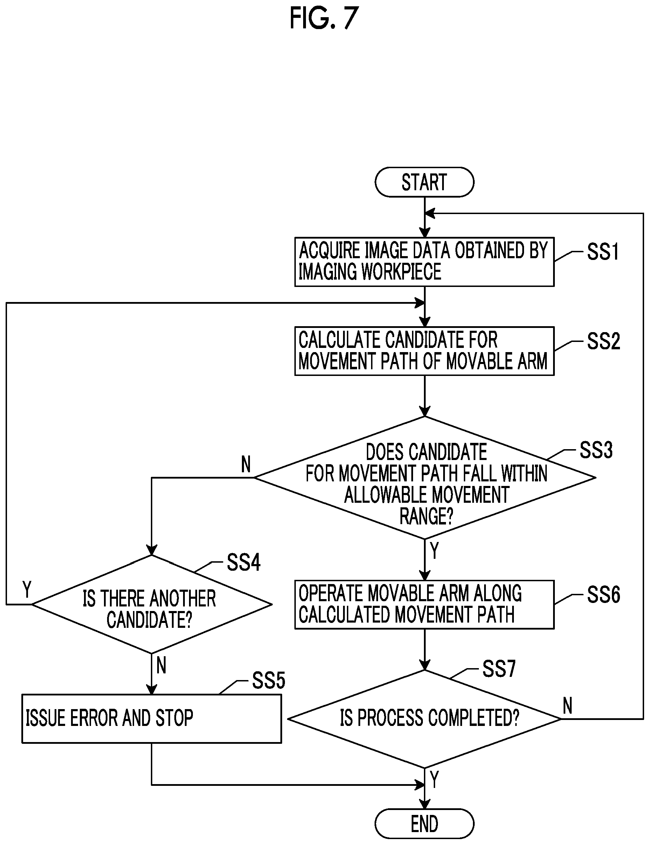

Fig. 7 is a flowchart showing a process performed by the movement range limiting unit 114 and the arm control unit 115. First, the movement range limiting unit 114 acquires the image data obtained by imaging the workpiece with the camera 123 (step SS1). A candidate for the movement path of the movable arm 120 is determined based on the acquired image data and a learning model constructed by the imitation learning unit 112 (Fig. 5) (step SS2).

The movement range limiting unit 114 determines whether or not the candidate for the movement path falls within the allowable movement range 130 (Figs. 6A and 6B) determined by the allowable range determination unit 113 (Fig. 5) (step SS3). As an example, the movement path given as the candidate is the movement path of the end effector 120A. When all the positions of the end effector 120A and the plurality of joints when the end effector 120A moves along the movement path fall within the allowable movement range 130, it is determined that the candidate for the movement path falls within the allowable movement range 130. In a case where at least one of the positions of the end effector 120A and the plurality of joints protrudes outward from the allowable movement range 130, it is determined that the candidate for the movement path does not fall within the allowable movement range 130.

In a case where the candidate for the movement path does not fall within the allowable movement range 130, it is determined whether or not there is another candidate for the movement path (step SS4). In a case where there is another candidate for the movement path, the other candidate is adopted as the candidate for the movement path (step SS2). In a case where there is no other candidate for the movement path, an error is issued and the process is stopped (step SS5). That is, the movement range limiting unit 114 has a function of determining the movement path of the movable arm 120 under the condition in which the movement range of the movable arm 120 is limited to the allowable movement range 130. The error is issued, for example, by displaying an error message on the display unit 122.

In a case where it is determined in step SS3 that the candidate for the movement path falls within the allowable movement range 130, the arm control unit 115 (Fig. 5) operates the movable arm 120 based on the candidate for the movement path (step SS6). Accordingly, the workpiece is taken out from the accommodation location and transported to a predetermined position. In a case where an unprocessed workpiece remains, the process from step SS1 is repeated (step SS7). If no unprocessed workpiece remains, the process is ended.

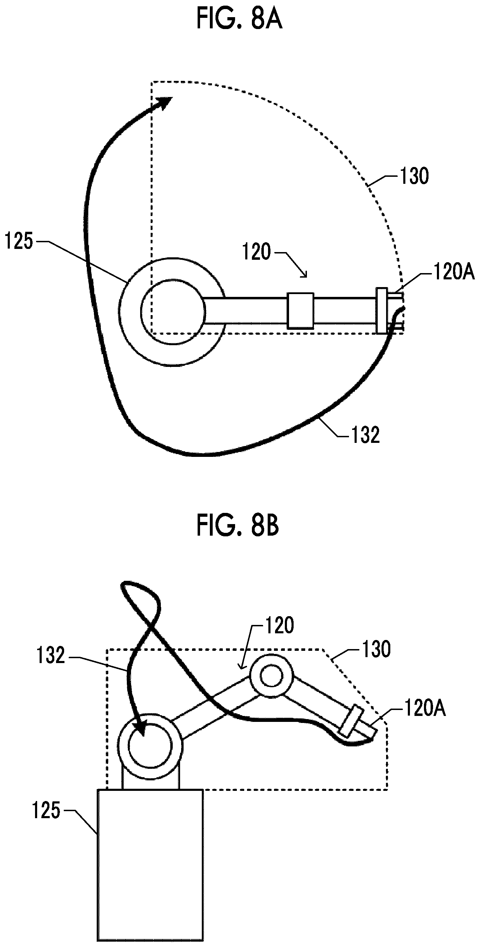

Next, excellent effects of the second embodiment will be described with reference to Figs. 8A to 9B.

Fig. 8A is a plan view showing an example of a candidate 132 for the movement path of the end effector 120A of the movable arm 120, and Fig. 8B is a cross-sectional view including the turning center axis of the movable arm 120. In a case where preconditions for obtaining the candidate for the movement path are significantly different from conditions expected at the time of teaching, a situation may occur in which the candidate 132 for the movement path deviates significantly from the expected path and does not fall within the allowable movement range 130. In this case, in the second embodiment, the movable arm 120 is not operated along the candidate 132 for the movement path. In other words, it is possible to avoid the occurrence of a situation in which the movable arm 120 deviates from the allowable movement range 130 and operates. Therefore, it is possible to avoid a collision between the movable arm 120 and the worker by prohibiting the worker from entering the allowable movement range 130.

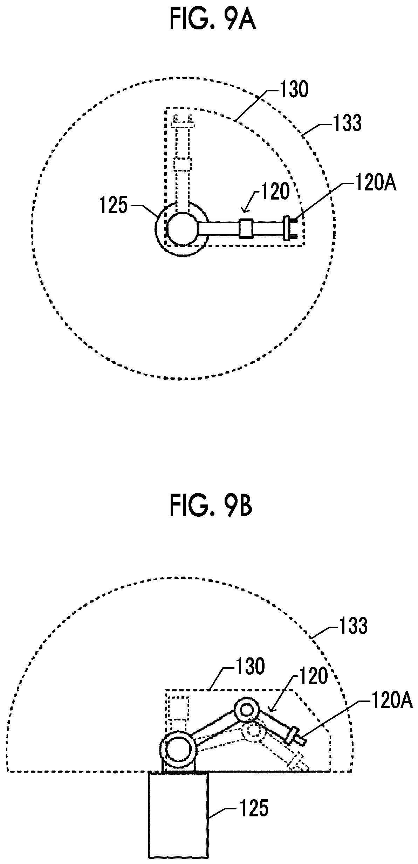

Fig. 9A is a plan view showing an example of an entire movable range 133 of the movable arm 120 in comparison to the allowable movement range 130 (Figs. 6A and 6B) determined by the method according to the second embodiment, and Fig. 9B is a cross-sectional view including the turning center axis of the movable arm 120. A substantially hemispherical region centered on the base portion of the movable arm 120 and having the longest length of the movable arm 120 as a radius corresponds to the entire movable range 133 of the movable arm 120. In a case where there is no function of limiting the movement range of the movable arm 120, in order to avoid collision between the worker and the movable arm 120 even in a case where the movable arm 120 performs an unexpected operation as shown in Figs. 8A and 8B, it is preferable to set the entire movable range 133 as an off-limit area. Furthermore, it is preferable to keep the robot away from an obstacle so that the obstacle, for example, a wall surface or ceiling, is not disposed within the entire movable range 133.

On the other hand, in the second embodiment, the movement range of the movable arm 120 is limited to the allowable movement range 130. The allowable movement range 130 is narrower than the entire movable range 133 (Figs. 9A and 9B) of the movable arm 120. Therefore, it is possible to reduce the off-limit area for the worker. Furthermore, an obstacle may be disposed even inside the entire movable range 133 as long as the obstacle is outside the allowable movement range 130. In other words, the robot can be installed close to the obstacle. For example, even if a ceiling of a place in the factory is lower than a top of the entire movable range 133 of the movable arm 120, in a case where the ceiling is higher than the allowable movement range 130, the robot can be installed at the place. Therefore, the space in the factory can be effectively used.

In addition, in the second embodiment, when allowable movement range 130 is fixedly set as the off-limit area, collision between the worker and the movable arm 120 can be avoided without disposing a sensor or the like for detecting an entry of the worker in the vicinity of the movable arm 120.

When the allowable movement range 130 is defined by at least one primitive figure, the amount of calculation for determining whether or not the candidate for the movement path falls within the allowable movement range 130 (Figs. 6A and 6B) in step SS3 can be reduced.

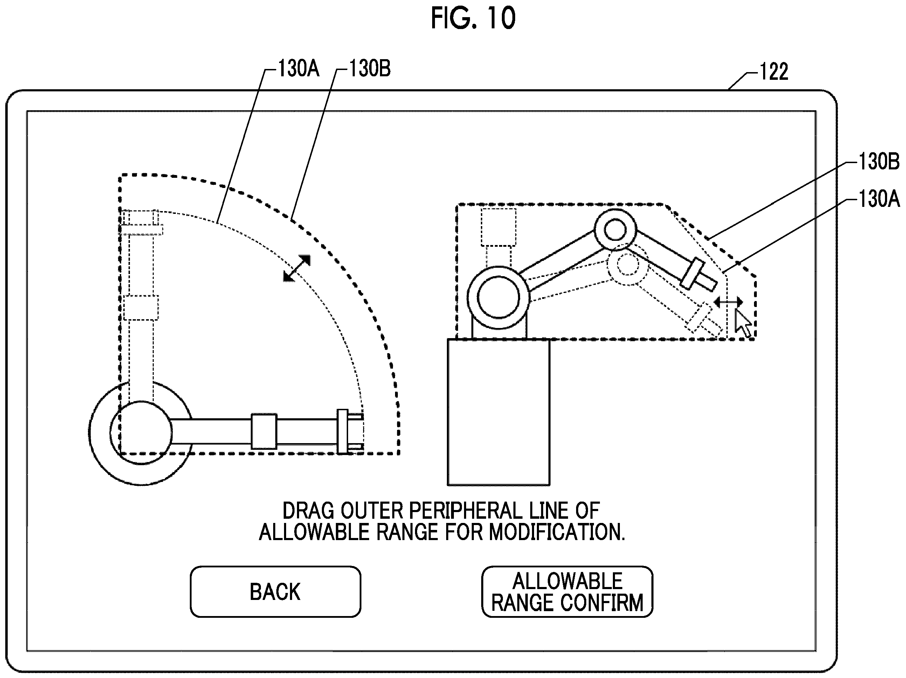

Next, a robot control device according to another embodiment will be described with reference to Fig. 10. Hereinafter, description of the configuration common to the second embodiment described with reference to Figs. 5 to 9B will be omitted. In the present embodiment, the user can modify the allowable movement range 130 (Figs. 6A and 6B) determined by the allowable range determination unit 113 (Fig. 5).

Fig. 10 is a view showing an image displayed on the display unit 122 (Fig. 5). An allowable movement range 130A that has been determined at this time by the allowable range determination unit 113 based on the movement trajectory of the movable arm 120 during teaching and the movable arm 120 are displayed on the display unit 122 so that a positional relationship between the two can be identified. For example, a positional relationship (left side view of Fig. 10) in a plan view and a positional relationship (right side view of Fig. 10) in a vertical cross section between the allowable movement range 130A and the movable arm 120 are displayed.

The user can modify the allowable movement range 130A by operating the input unit 121 such as a pointing device and newly set the modified allowable movement range 130B. This modification can be performed, for example, by dragging an outer peripheral line of the allowable movement range 130A. Fig. 10 shows an example in which the allowable movement range 130A before modification is extended in a radial direction centered on the turning center axis.

After the user modifies the allowable movement range 130A and then clicks or taps an "allowable range confirm" button, the allowable range determination unit 113 sets the modified allowable movement range 130B as a new allowable movement range 130. When the user clicks or taps a "back" button, the allowable range determination unit 113 ends a modification procedure without modifying the allowable movement range 130A.

Next, excellent effects of the present embodiment will be described.

In the present embodiment, the user can modify the allowable movement range 130A determined based on the movement trajectory of the movable arm 120 during teaching according to a situation around the movable arm 120. For example, in a case where a region wider than the allowable movement range 130A before the modification is secured as the off-limit region, a range wider than the allowable movement range 130A determined based on the movement trajectory of the movable arm 120 during teaching may be set as the allowable movement range 130B. In addition, in a case where the ceiling of the factory where the movable arm 120 is installed is sufficiently high and the movable arm 120 does not reach the ceiling even when the movable arm 120 is extended upward to the maximum, the height limitation of the allowable movement range 130B may be removed.

When the allowable movement range 130 is widened, a probability that the candidate for the movement path falls within the allowable movement range 130 in the determination process in step SS3 (Fig. 7) increases. Accordingly, it is possible to reduce a frequency of researching for the candidate for the movement path. In addition, an excellent effect of reducing a frequency of issue of an error can be obtained.

Contrary to this, in a case where another device is newly installed in the vicinity of the movable arm 120, the allowable movement range 130 can be narrowed so that the movable arm 120 does not collide with the newly installed device.

Next, a modification example of the second embodiment will be described.

In the second embodiment, a control target is the movable arm 120 (Fig. 5) of the cooperative robot, but the control target may be another movable arm. For example, the control target may be a boom, an arm, and an attachment (acting portion) of an autopilot excavator. In this case, the boom, the arm, and the attachment correspond to the movable arm 120 of the second embodiment.

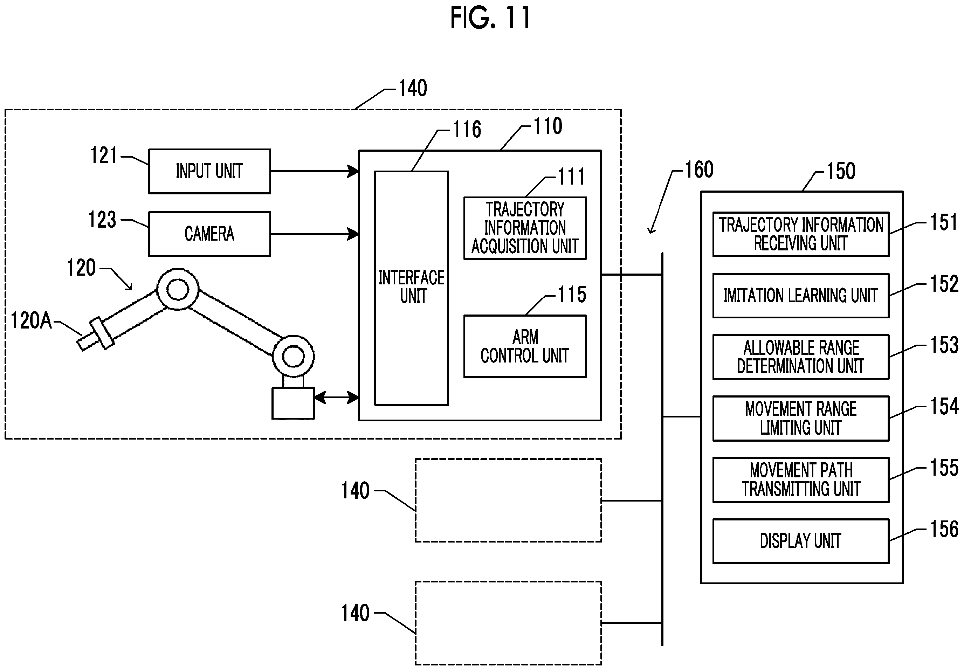

Next, a system for controlling a robot according to still another embodiment will be described with reference to Fig. 11. Hereinafter, description of the configuration common to the embodiments described with reference to Figs. 5 to 10 will be omitted.

Fig. 11 is a block diagram of a system according to the present embodiment. The system according to the present embodiment includes a plurality of robots 140 including the movable arm 120 and the control device 110, a network 160 such as a LAN, and a control server 150. The plurality of robots 140 are connected to the control server 150 via the network 160. The functions of some units of the control device 110 according to the embodiment shown in Fig. 5 are realized by the control server 150. The control device 110 and the control server 150 have a function of transmitting and receiving various commands and data via the network 160.

The control device 110 of each of the robots 140 includes the trajectory information acquisition unit 111, the arm control unit 115, and the interface unit 116. The functions of the trajectory information acquisition unit 111, the arm control unit 115, and the interface unit 116 are respectively the same as the functions of the trajectory information acquisition unit 111, the arm control unit 115, and the interface unit 116 of the control device 110 according to the embodiment shown in Fig. 5.

The control server 150 includes a trajectory information receiving unit 151, an imitation learning unit 152, an allowable range determination unit 153, a movement range limiting unit 154, a movement path transmitting unit 155, and a display unit 156. The trajectory information receiving unit 151 receives the trajectory information indicating the movement trajectory during teaching acquired by the trajectory information acquisition unit 111 of the robot 140 via the network 160. Functions of the imitation learning unit 152, the allowable range determination unit 153, the movement range limiting unit 154, and the display unit 156 are respectively the same as the imitation learning unit 112, the allowable range determination unit 113, and the movement range limiting unit 114 of the control device 110, and the display unit 122 of the robot 140.

That is, the movement range limiting unit 154 performs a procedure from step SS1 to step SS5 in the flowchart shown in Fig. 7. In addition, in step SS1, image data imaged by the camera 123 of the robot 140 is acquired. In step SS3, in a case where it is determined that a candidate for the movement path falls within the allowable movement range, the movement path transmitting unit 155 transmits information indicating the candidate for the movement path to the arm control unit 115 of the control device 110 via the network 160. The arm control unit 115 controls the movable arm 120 based on the received information indicating the candidate for the movement path.

Next, excellent effects of the embodiment shown in Fig. 11 will be described.

Also in the embodiment shown in Fig. 11, the space in the factory can be effectively used as in the embodiment shown in Figs. 5 to 9B.

Next, a modification example of the above-described embodiment will be described. It is also possible to construct a system in which the control server 150 controls the autopilot excavator instead of the robot 140 of the system according to the embodiment shown in Fig. 11. That is, the control server 150 can be used to control a work machine such as the robot 140 and the autopilot excavator. In addition, the division of functions between the control device 110 and the control server 150 is not limited to the embodiment shown in Fig. 11. For example, the functions of some units of the control device 110 may be realized by the control server 150, or some of the functions of the control server 150 may be realized by the control device 110.

It is needless to say that each of the above-described embodiments is an example, and partial replacement or combination of the configurations shown in different embodiments is possible. Similar effects of the same configuration of a plurality of the embodiments will not be sequentially referred to for each embodiment. Furthermore, the present invention is not limited to the above-described embodiments. For example, it will be obvious to those skilled in the art that various changes, improvements, combinations, and the like are possible.

(Outline of Second Embodiment)

An outline of the device and the system of the second embodiment are as follows.

[Outline 1 of Second Embodiment]

A control device including:

a trajectory information acquisition unit that acquires trajectory information indicating a movement trajectory of a movable arm given by teaching;

an allowable range determination unit that determines an allowable movement range of the movable arm from the trajectory information acquired by the trajectory information acquisition unit; and

a movement range limiting unit that limits a movement range of the movable arm within the allowable movement range determined by the allowable range determination unit.

[Outline 2 of Second Embodiment]

The control device according to outline 1 of the second embodiment,

in which the movable arm includes at least one joint and an acting portion located at a tip thereof, and
the allowable range determination unit determines the allowable movement range for a set of movement trajectories of each of the acting portion and the joint.

[Outline 3 of Second Embodiment]

The control device according to outline 1 or 2 of the second embodiment, further including: a display unit, in which the allowable range determination unit displays information indicating the determined allowable movement range on the display unit.

[Outline 4 of Second Embodiment]

The control device according to any one of outlines 1 to 3 of the second embodiment, further including: an input unit to be operated by a user,
in which, when the user operates the input unit to modify the allowable movement range determined at a current time, the allowable range determination unit determines a modified range as a new allowable movement range.

[Outline 5 of Second Embodiment]

The control device according to any one of outlines 1 to 4 of the second embodiment, in which the allowable range determination unit determines the allowable movement range based on a convex hull of movement trajectories given by teaching, or determines the allowable movement range by at least one primitive figure including movement trajectories given by the teaching.

[Outline 6 of Second Embodiment]

The control device according to outline 5 of the second embodiment, in which the allowable range determination unit determines the allowable movement range without an intervention of a user.

[Outline 7 of Second Embodiment]

The control device according to any one of outlines 1 to 6 of the second embodiment, further including:
an imitation learning unit that performs machine learning by associating a detection result by a sensor that detects a target with the movement trajectory of the movable arm given by the teaching.

[Outline 8 of Second Embodiment]

A system including:

a trajectory information receiving unit that receives trajectory information indicating a movement trajectory of a movable arm given by teaching from a work machine;
an allowable range determination unit that determines an allowable movement range of the movable arm from the trajectory information received by the trajectory information receiving unit;
a movement range limiting unit that determines a movement path of the movable arm under a condition in which a movement range of the movable arm is limited within the allowable movement range determined by the allowable range determination unit; and
a movement path transmitting unit that transmits information indicating the movement path determined by the movement range limiting unit to the work machine.

(Third Embodiment)

Japanese Unexamined Patent Publication No. 2017-136677 discloses a system that recognizes a posture of a target based on an image of the target and a measurement result of a contact position with the target, and performs picking. In the system disclosed in the above-described publication, a position of a target wrapped in a plastic bag or a cushioning material can be recognized by using the image of the target and the measurement information due to a contact with the target in combination.

Japanese Unexamined Patent Publication No. 2020-82322 discloses a picking device that generates a learning data set for machine learning using a simulator and performs machine learning using the learning data set.

Data input to a learning model used in an actual picking operation is data collected by actually coming into contact with a target in an actual environment. It is difficult for the learning data set generated using the simulator to reproduce friction or the like generated when the target is contacted in an actual environment. Therefore, it is difficult to improve accuracy of the learning model.

In a third embodiment, a picking device and a learning device capable of improving the accuracy of the learning model are provided.

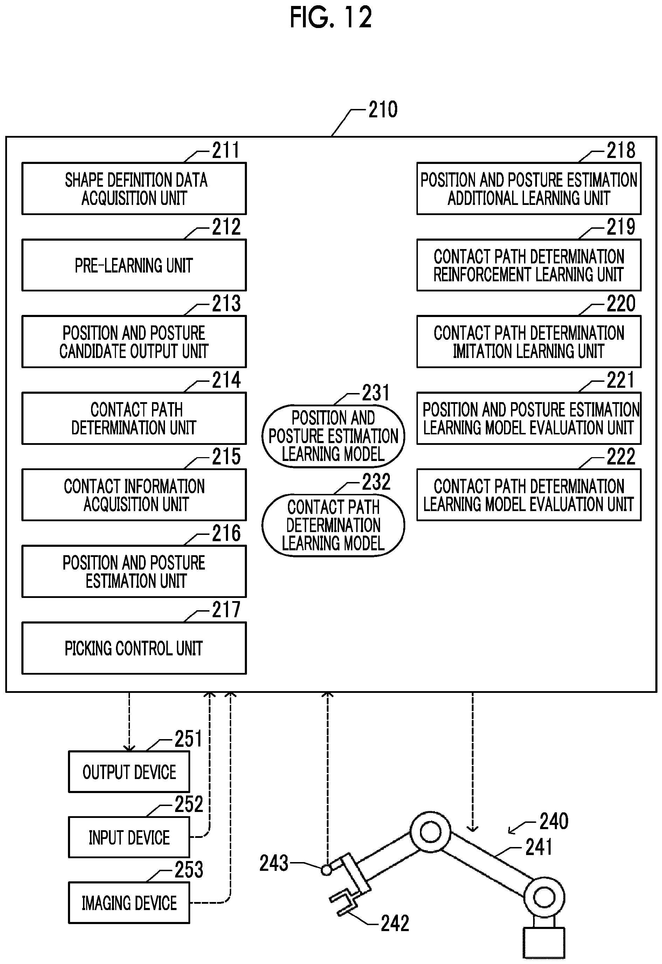

The picking device according to the third embodiment of the present invention will be described with reference to Figs. 12 to 21.

Fig. 12 is a block diagram of the picking device according to the third embodiment. The picking device according to the third embodiment includes a control device 210, a picking mechanism 240, an output device 251, an input device 252, and an imaging device 253. The picking mechanism 240 includes an articulated robot arm 241, a grasping portion 242 attached to a tip thereof, and a force sensor 243. The force sensor 243 may be attached to another robot arm different from the articulated robot arm 241 that moves the grasping portion 242. A combination of the control device 210 and the force sensor 243 corresponds to an example of the information processing device according to the present invention.

The imaging device 253 images a target to be picked and acquires image data. From this image data, a rough position of the target can be identified. The image data imaged by the imaging device 253 is input to the control device 210. Alternatively, instead of the imaging device 253, a device that acquires information for obtaining a candidate for a position or a posture of a target in a non-contact manner may be used. For example, a depth sensor that can obtain information on depths on an image in addition to a two-dimensional image may be used.

The input device 252 is for inputting various types of data and commands to the control device 210, and is realized by, for example, a keyboard, a pointing device, a touch panel, a communication device, or a removable media reading device. The data, commands, and the like input to the input device 252 are input to the control device 210. The output device 251 is for outputting various types of data, images, notification information, and the like under the control of the control device 210, and is realized by, for example, a display, a communication device, or a removable media writing device.

The articulated robot arm 241 can support the grasping portion 242 in any posture and move the grasping portion 242 in any path under the control of the control device 210. The grasping portion 242 performs an operation of grasping the target and an operation of releasing the target under the control of the control device 210. Furthermore, the articulated robot arm 241 can support the force sensor 243 in any posture and move the force sensor 243 in any path under the control of the control device 210.

The force sensor 243 includes a contactor, and when the contactor comes into contact with a surface of a target, the force sensor 243 acquires information on a reaction force from a contacted portion. Contact information includes information for specifying a position of a contact point and information for specifying an orientation of a reaction force from the contact point. The orientation of the reaction force is substantially equal to a direction of a normal to a surface with which the contactor comes into contact. The force sensor 243 stops at a time when the force sensor 243 receives a very small reaction force, so that it is possible to acquire the contact information without moving the target. The contact information is used as basic information for estimating the position and posture of the target.

The control device 210 is configured as a computer including a central processing unit (CPU), a RAM, a non-volatile memory, an interface unit, and the like. A program executed by the CPU is stored in the non-volatile memory. Various functions of the control device 210, which will be described later, are realized by the CPU executing the program.

Next, various functions of the control device 210 will be described.

[Shape Definition Data Acquisition Unit]

A shape definition data acquisition unit 211 acquires shape definition data that defines the shape of the target to be picked. The shape definition data is, for example, CAD data and is input from the input device 252. The shape definition data acquisition unit 211 stores the acquired shape definition data in the RAM.

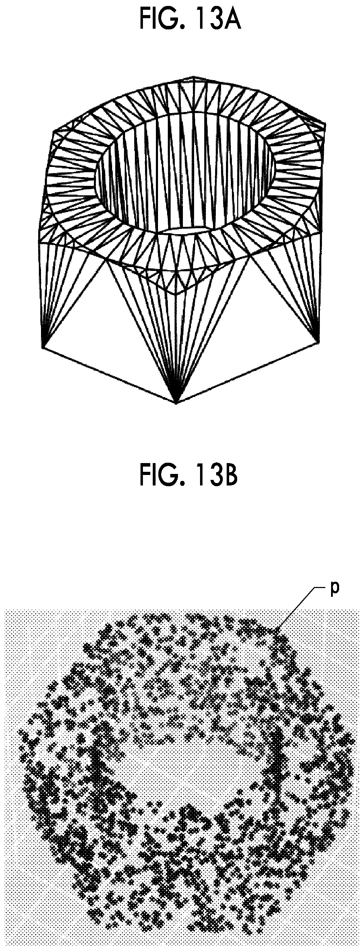

Fig. 13A is a view showing CAD data defining a shape of a hexagon nut as an example of the target on a flat surface. Surfaces of the hexagon nut are represented by a plurality of triangular elements. A three-dimensional shape defined by CAD data is called a CAD model.

[Pre-Learning Unit]

A pre-learning unit 212 (Fig. 12) learns a position and posture estimation learning model 231 using a simulator. Specifically, the position and posture estimation learning model 231 is learned based on the shape definition data acquired by the shape definition data acquisition unit 211. When the contact information is input from the force sensor 243, the position and posture estimation learning model 231 outputs a result of estimating the position and the posture of the target. Hereinafter, a function of the pre-learning unit 212 will be described.

The pre-learning unit 212 defines a plurality of reference points p located on the surface of the CAD model based on the shape definition data. For example, thousands of reference points p are defined.

Fig. 13B is a view showing the plurality of reference points p defined on the surface of the CAD model on a flat surface. The reference point p is represented by a black dot. The pre-learning unit 212 extracts representative reference point $p\_i$ from the plurality of reference points p. Here, i is a serial number assigned to the representative reference point. For example, the number of representative reference points $p\_i$ is about 5 to 210.

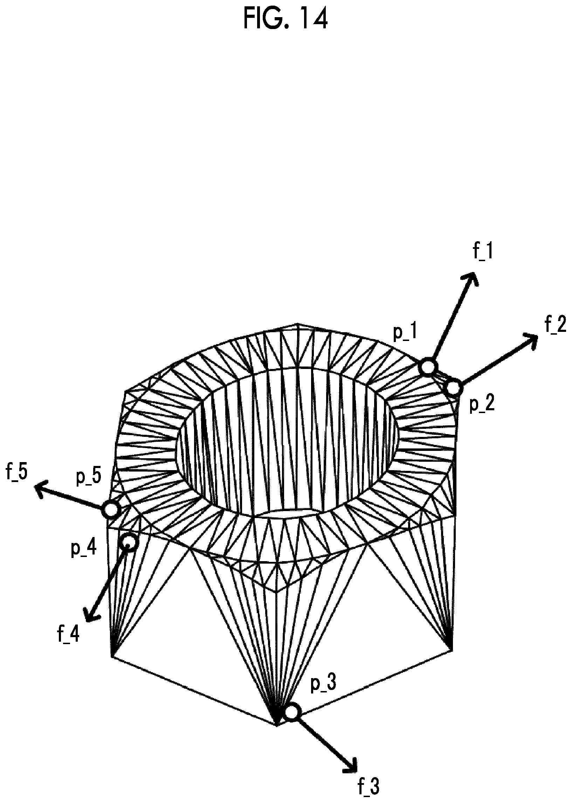

Fig. 14 is a schematic view showing a plurality of the representative reference points $p\_i$. The pre-learning unit 212 obtains, for each of the representative reference points $p\_i$, a normal vector $f\_i$ of a surface to which the representative reference point $p\_i$ belongs. A data set $\{p\_i, f\_i | i = 1, 2, ... k\}$ including the plurality of representative reference points $p\_i$ and the normal vectors $f\_i$ can be obtained. Here, k is the number of representative reference points $p\_i$. The obtained data set is subjected to coordinate transformation using a vector representing a translation t and a rotation r. The position and the posture of the target are specified by the translation t and the rotation r. In the present specification, the vector that defines the translation t and the rotation r is referred to as a position and posture vector $\{t, r\}$.

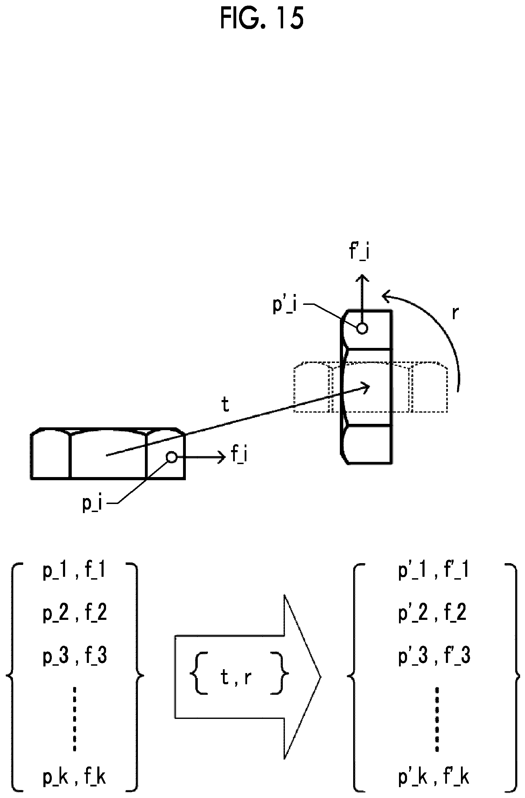

Fig. 15 is a schematic view showing an example of the coordinate transformation used in the pre-learning. By performing coordinate transformation of the representative reference point $p\_i$ and the normal vector $f\_i$ with the position and posture vector defined by the translation t and the rotation r, a transformed representative reference point $p'\_i$ and a transformed normal vector $f'\_i$ is obtained. The transformed representative reference point $p'\_i$ and the transformed normal vector $f'\_i$ are represented by, for example, a robot coordinate system based on a base portion of the articulated robot arm 241.

The pre-learning unit 212 (Fig. 12) sets a transformed data set $\{p'\_i, f'\_i | i = 1, 2, ... k\}$, and the position and posture vector $\{t, r\}$ defined by the translation t and the rotation r used for the transformation as one learning data set, and generates a plurality of learning data sets. At this time, the position and posture vector $\{t, r\}$ is randomly generated. As an example, the number of learning data sets to be generated is about one million.

Pre-learning is performed using the plurality of learning data sets generated. For example, the position and posture estimation learning model 231 is learned using the transformed data set $\{p'\_i, f'\_i | i = 1, 2, ... k\}$ as an input and the position and posture vector $\{t, r\}$ as an output. Specifically, parameters of a neural network of the position and posture estimation learning model 231 are determined. Each element of the transformed data set $\{p'\_i, f'\_i | i = 1, 2, ... k\}$ corresponds to the contact position and the direction of the reaction force of the contact information obtained by the force sensor 243.

[Position And Posture Candidate Output Unit]

A position and posture candidate output unit 213 acquires the image data of the target imaged by the imaging device 253 and analyzes the image data to output a plurality of candidates for the position and the posture of the target. Each of the plurality of candidates for the position and the posture is specified by the position and posture vector $\{t, r\}$. The plurality of candidates output are stored in the RAM or the like.

[Contact Path Determination Unit]

A contact path determination unit 214 determines a contact path of the force sensor 243 for bringing the force sensor 243 into contact with the target by using the plurality of candidates output by the position and posture candidate output unit 213 as an input to a contact path determination learning model 232. The contact path includes a path for moving the force sensor 243 and information designating the posture of the force sensor 243.

In a case where the contact path determination learning model 232 has not been learned, for example, the contact path determination unit 214 obtains a minimal bounding sphere of the plurality of candidates for the position and the posture of the target, and determines a plurality of paths toward a center of the minimal bounding sphere as the contact path.

[Contact Information Acquisition Unit]

A contact information acquisition unit 215 acquires contact information when the force sensor 243 comes into contact with the target. The contact information includes information on the contacting position and information indicating an orientation of a reaction force that the force sensor 243 receives from the target. An operation of bringing the force sensor 243 into contact with the target is referred to as a contact operation.

[Position And Posture Estimation Unit]

A position and posture estimation unit 216 estimates the position and the posture of the target by using a plurality of pieces of contact information acquired by the contact information acquisition unit 215 by the contact operation performed a plurality of times as an input to the position and posture estimation learning model 231.

[Picking Control Unit]

A picking control unit 217 controls the picking mechanism 240 based on the position and the posture of the target estimated by the position and posture estimation unit 216 to allow the grasping portion 242 to pick the target. Furthermore, the picking control unit 217 outputs information on whether or not the picking of the target is successful. The success or failure of the picking can be determined from a relative positional relationship between a plurality of fingers of the grasping portion 242 (Fig. 12) after the picking operation.

[Position And Posture Estimation Additional Learning Unit]

A position and posture estimation additional learning unit 218 performs additional learning of the position and posture estimation learning model 231 using the information obtained in the actual picking operation. The user can command whether or not the additional learning is to be performed during an actual operation.

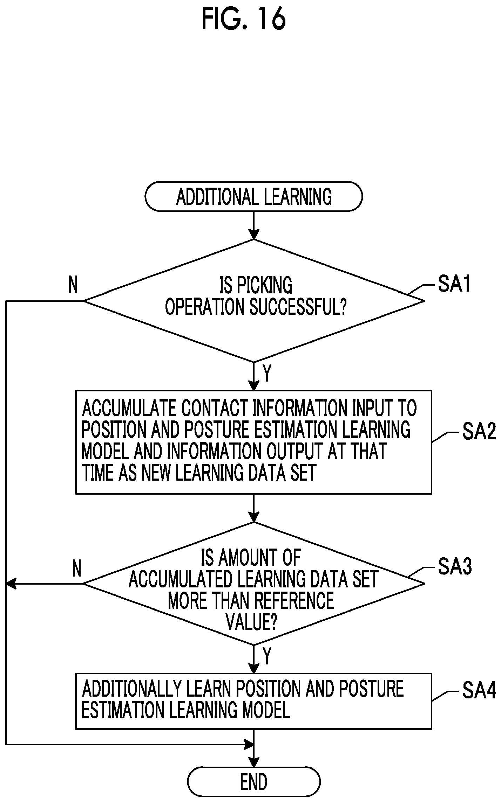

Fig. 16 is a flowchart showing a procedure in which the position and posture estimation additional learning unit 218 performs the additional learning. The position and posture estimation additional learning unit 218 determines whether or not the picking operation is successful (step SA1). In a case where the picking operation fails, the additional learning of the position and posture estimation learning model 231 is not performed. In a case where the picking operation is successful, the plurality of pieces of contact information used by the position and posture estimation unit 216 as the input to the position and posture estimation learning model 231 and a position and posture vector {t,r} output when the contact information is input is accumulated as a new learning data set (step SA2).
In a case where the amount of the accumulated learning data set is equal to or less than a reference value, the position and posture estimation additional learning is ended (step SA3). In a case where the amount of the accumulated learning data set is more than the reference value, the position and posture estimation learning model 231 is additionally learned using the contact information of the accumulated learning data set as an input and the position and posture vector {t,r} as an output.

[Contact Path Determination Reinforcement Learning Unit]

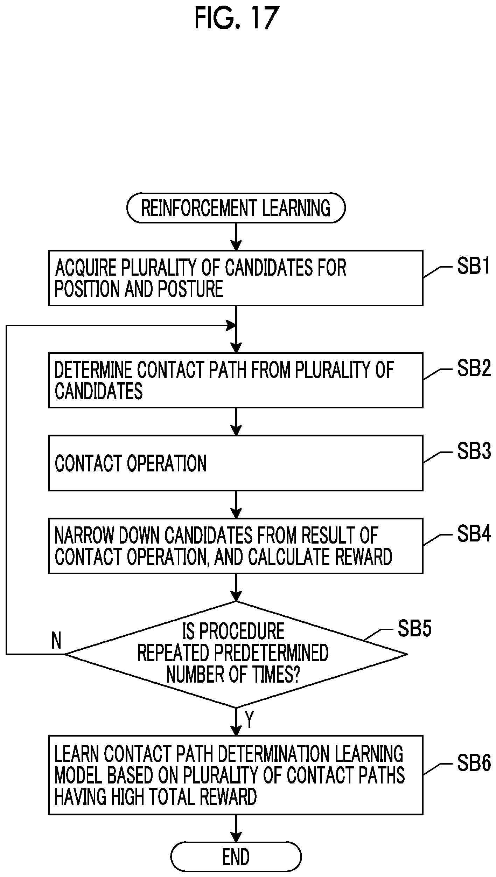

A contact path determination reinforcement learning unit 219 (Fig. 12) performs reinforcement learning of the contact path determination learning model 232. Specifically, parameters of neural network of the contact path determination learning model 232 are generated. Hereinafter, a procedure of reinforcement learning performed by the contact path determination reinforcement learning unit 219 will be described with reference to Fig. 17.
Fig. 17 is a flowchart showing a procedure in which the contact path determination reinforcement learning unit 219 performs the reinforcement learning. First, the contact path determination reinforcement learning unit 219 acquires the plurality of candidates for the position and the posture of the target from the position and posture candidate output unit 213 (step SB1). Any one contact path is determined from the plurality of candidates (step SB2). For example, a minimal bounding sphere of a region where the plurality of candidates can exist is obtained, and any one path toward a center of the minimal bounding sphere is determined as the contact path.
After the contact path is determined, the force sensor 243 is moved along the contact path to perform a contact operation (step SB3). Candidates are narrowed down from a result of the contact operation, and a reward is calculated (step SB4). For example, in a case where a candidate having a position and a posture is located in a region through which the force sensor 243 passes without contact in the contact operation, the candidate is rejected. Furthermore, a candidate located outside a sphere having a contact point as a center and having a maximum dimension of the target as a radius is also rejected. The number of candidates rejected by one contact operation is used as a reward.

The procedure from step SB2 to step SB4 is repeated a predetermined number of times (step SB5). Thereafter, the contact path determination learning model 232 is learned by using a set of the plurality of candidates acquired in step SB1 as an input and using a plurality of contact paths having a high total reward as an output (step SB6). That is, the contact path determination reinforcement learning unit 219 performs reinforcement learning using the set of the plurality of candidates for the position and the posture of the target as a "state", the contact operation by the plurality of contact paths as a "behavior", and the number of reduced candidates for the position and the posture of the target as a "reward".

[Contact Path Determination Imitation Learning Unit]

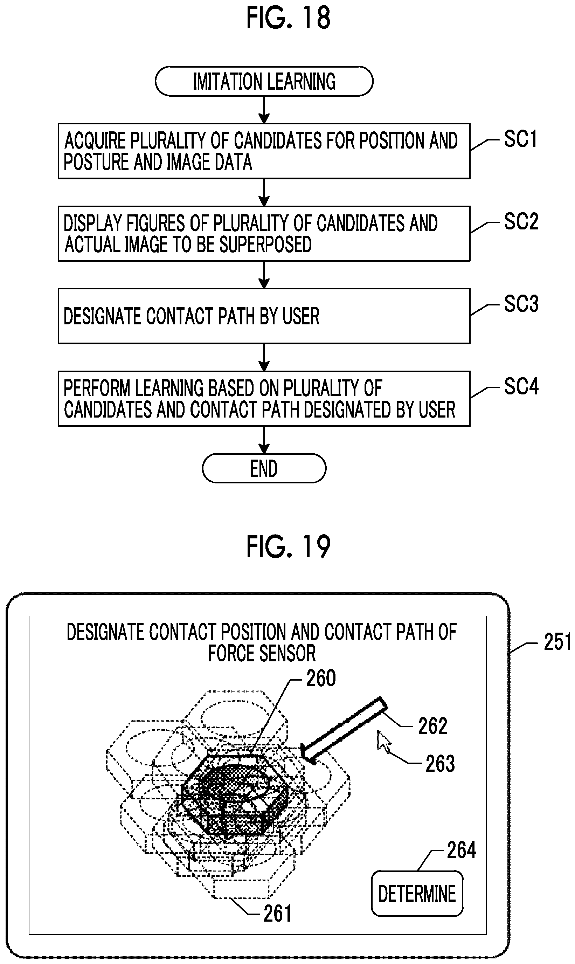

A contact path determination imitation learning unit 220 performs imitation learning of the contact path determination learning model 232. Hereinafter, a procedure of the imitation learning performed by the contact path determination imitation learning unit 220 will be described with reference to Figs. 18 and 19.

Fig. 18 is a flowchart showing a procedure in which the contact path determination imitation learning unit 220 performs the imitation learning. First, the contact path determination imitation learning unit 220 acquires the plurality of candidates for the position and the posture of the target from the position and posture candidate output unit 213, and image data from which the candidates are output (step SC1). After the acquisition of the data, figures of the plurality of candidates and an image are displayed to be superposed on the output device 251 (step SC2).

Fig. 19 is a view showing an example of the figures and the image output to the output device 251. An actual image 260 of the target is displayed, and a plurality of candidates 261 are displayed as broken lines so as to be superposed on the image 260. Furthermore, a contact path designation arrow 262 for designating the contact path of the force sensor 243 is displayed. The user designates the contact path by moving a pointer 263 to modify a position and a direction of the contact path designation arrow 262. The image 260, the figures showing the plurality of candidates 261, and the contact path designation arrow 262 can be rotated three-dimensionally by operating the pointer 263. After completing the adjustment of the contact path designation arrow 262, the user clicks or taps a determine button 264 to designate the contact path (step SC3).

After the contact path is designated, the contact path determination imitation learning unit 220 performs the imitation learning of the contact path determination learning model 232 based on the plurality of candidates for the position and the posture of the target and the contact path designated by the user (step SC4).

[Position And Posture Estimation Learning Model Evaluation Unit]

A position and posture estimation learning model evaluation unit 221 (Fig. 12) evaluates the position and posture estimation learning model 231. Specifically, a frequency of success or failure of picking when the position and the posture of the target are estimated by the position and posture estimation unit 216 using the position and posture estimation learning model 231 and the picking control unit 217 performs the picking operation based on the estimation result is obtained. When the frequency of the failure of grasping is more than the reference value, the user is notified to perform the additional learning by the position and posture estimation additional learning unit 218. This notification is performed, for example, by displaying a message on the output device 251.

[Contact Path Determination Learning Model Evaluation Unit]

A contact path determination learning model evaluation unit 222 evaluates the contact path determination learning model 232. Specifically, the contact path determination learning model evaluation unit 222 counts, for each of targets, the number of times the force sensor 243 is brought into contact with the target until the picking is successful, and when the number of contacts is more than a reference value, notifies the user to perform the learning of the contact path determination learning model 232. This notification is performed, for example, by displaying a message on the output device 251.

The picking device according to the third embodiment operates in any mode of an operation mode and a learning mode. The operation mode includes two modes, an additional learning operation mode and a general operation mode. The user commands the control device 210 to operate the picking device in which mode by operating the input device 252.

[Operation Mode]

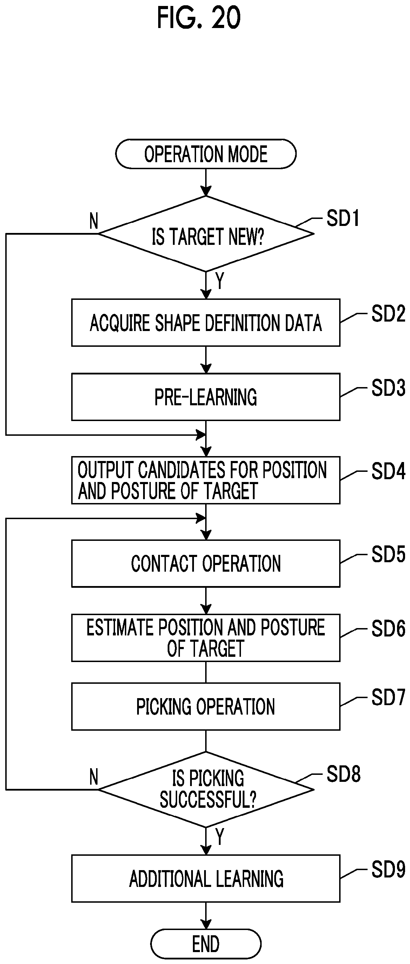

An operation of the picking device in the additional learning operation mode will be described with reference to Fig. 20. Fig. 20 is a flowchart showing the operation of the picking device in the additional learning operation mode.

First, the user determines whether or not a target to be picked is new (step SD1). In a case where the target is new, the user operates the input device 252 (Fig. 12) to instruct the control device 210 to perform the pre-learning. When the pre-learning is instructed to be performed, the shape definition data acquisition unit 211 acquires shape definition data (Fig. 13A) (step SD2). Based on the acquired shape definition data, the pre-learning unit 212 (Fig. 12) performs pre-learning of the position and posture estimation learning model 231 (step SD3).

In a case where the target to be picked is not new and the pre-learning of the position and posture estimation learning model 231 has already been completed, or when the pre-learning is ended in step SD3, the position and posture candidate output unit 213 (Fig. 12) acquires image data of the target, performs image analysis, and outputs a plurality of candidates for a position and a posture of the target (step SD4).

When the plurality of candidates are output, the contact path determination unit 214 (Fig. 12) determines a predetermined plurality of contact paths of the force sensor 243, and the contact information acquisition unit 215 performs a predetermined plurality of contact operations (step SD5). The number of contact paths determined and the number of contact operations are preset, and are, for example, three. Thereafter, the position and posture estimation unit 216 (Fig. 12) estimates the position and the posture of the target using the position and posture estimation learning model 231 based on a plurality of pieces of contact information obtained by the contact operations (step SD6).

Next, the picking control unit 217 controls the picking mechanism 240 based on the estimated position and posture to perform a picking operation (step SD7). In a case where the picking is successful, the position and posture estimation additional learning unit 218 performs the additional learning shown in Fig. 16 (step S9). Step SA1 in Fig. 16 is common to step SD8 in Fig. 20.

In a case where the picking fails in step SD7, the contact operation in step SD5 is performed again. At this time, since the candidates for the position and the posture of the target are narrowed down by the previous contact operations, the contact path determination unit 214 determines a plurality of contact paths different from the contact paths of the previous contact operations. The contact information acquisition unit 215 performs a plurality of contact operations based on the newly determined plurality of contact paths, and acquires contact information. In step SD6, the position and posture estimation unit 216 estimates the position and the posture of the target by using all the contact information acquired in the previous contact operations and the current contact operation. Since the number of pieces of contact information to be used increases, the estimation accuracy of the position and the posture of the target is increased.

In a case where the picking device is operated in the general operation mode, the additional learning (step SD9) is not performed.

[Learning Mode]

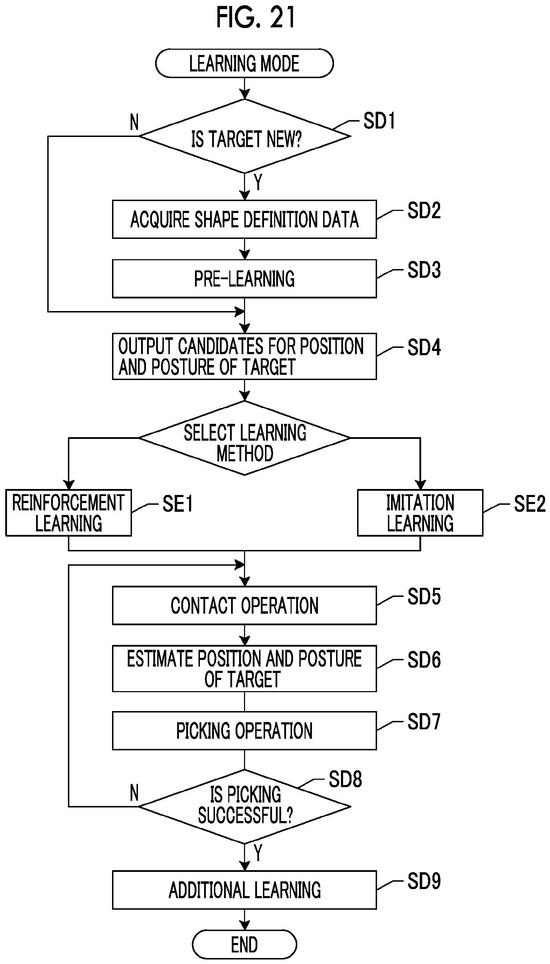

Next, an operation of the picking device in the learning mode will be described with reference to Fig. 21. Fig. 21 is a flowchart showing the operation of the picking device in the learning mode.

A procedure from step SD1 to step SD4 is the same as the procedure from step SD1 to step SD4 in the additional learning operation mode (Fig. 20). After step SD4, the control device 210 performs one of the reinforcement learning and the imitation learning according to a learning method commanded by the user. The user selects in advance which learning method is to be performed, and the input device 252 commands the control device 210 to perform the selected learning method.

In a case where the reinforcement learning is selected, the contact path determination reinforcement learning unit 219 (Fig. 12) performs the reinforcement learning according to the procedure shown in Fig. 17 (step SE1). In addition, in step SB1 shown in Fig. 17, the contact path determination reinforcement learning unit 219 acquires the candidates for the position and the posture output by the position and posture candidate output unit 213 (Fig. 12) in step SD4 of Fig. 21.

In a case where the imitation learning is selected, the contact path determination imitation learning unit 220 (Fig. 12) performs the imitation learning according to the procedure shown in Fig. 18 (step SE2). In step SC1 of Fig. 18, the contact path determination imitation learning unit 220 acquires the image data acquired by the position and posture candidate output unit 213 in step SD4 of Fig. 21 and the candidates for the position and the posture output by the position and posture candidate output unit 213.

After performing the reinforcement learning or the imitation learning, the control device 210 performs the same procedure as the procedure from step SD5 to step SD9 in the additional learning operation mode (Fig. 20).

Next, excellent effects of the third embodiment will be described.

In the third embodiment, the pre-learning unit 212 (Fig. 12) generates a large number of learning data sets using the CAD data shown in Fig. 13A. Therefore, the position and posture estimation learning model 231 (Fig. 12) can be learned without preparing a target and performing an actual picking operation.

Furthermore, the position and posture estimation additional learning unit 218 (Fig. 12) additionally learns the position and posture estimation learning model 231 using the data set (contact information and the estimated position and posture) acquired from the actual picking operation. Therefore, the position and posture estimation learning model 231 suitable for the actual environment can be constructed. For example, when the force sensor 243 comes into contact with a surface of a target, there are cases where a direction of a reaction force received by the force sensor 243 from the target deviates from a normal direction to the surface due to the influence of friction or the like. In the pre-learning, as shown in Fig. 14, since the position and posture estimation learning model 231 is learned on the assumption that the direction of the reaction force is the normal direction to the surface of the target, the friction generated in the actual environment and the like are not reproduced. Therefore, in a case where the position and posture estimation learning model 231 learned only by the pre-learning is used, there are cases where the estimation accuracy decreases. In the third embodiment, since the additional learning is performed using the data set obtained from the actual environment, the estimation accuracy of the position and posture estimation learning model 231 can be improved.

The contact path determination unit 214 determines the contact path of the force sensor 243 using the contact path determination learning model 232 learned by at least one learning method of the reinforcement learning and the imitation learning. Therefore, the position and posture estimation unit 216 can be provided with suitable contact information for estimating the position and the posture by the position and posture estimation unit 216 with high accuracy. Furthermore, the number of contacts until the picking is successful can be reduced. Accordingly, it is possible to increase a throughput.

Moreover, by operating the picking device in the learning mode (Fig. 21), a contact path determination learning unit including the contact path determination reinforcement learning unit 219 and the contact path determination imitation learning unit 220 learns the contact path determination learning model 232. Therefore, by using the contact path determination learning model 232, a preferable contact path that reduces the number of contacts until the picking is successful can be determined.

The position and posture estimation learning model evaluation unit 221 evaluates the estimation accuracy of the position and posture estimation learning model 231 and notifies the user to perform the additional learning in a case where the estimation accuracy is low. Specifically, in a case where the frequency of failure in the picking is more than the reference value, the user is notified to perform the additional learning. Therefore, the user can easily determine whether or not the additional learning of the position and posture estimation learning model 231 is to be performed.

Furthermore, the contact path determination learning model evaluation unit 222 evaluates the appropriateness of the contact path determined by using the contact path determination learning model 232. Specifically, in a case where the number of contacts until the picking is completed is more than the reference value, it is determined that the appropriateness of the determined contact path is low. In this case, the contact path determination learning model evaluation unit 222 notifies the user to learn the contact path determination learning model 232. Accordingly, the user can easily determine whether or not the contact path determination learning model 232 is to be learned.

The above-described third embodiment is an example, and the present invention is not limited to the above-described third embodiment. For example, it will be obvious to those skilled in the art that various changes, improvements, combinations, and the like are possible.

(Outline of Third Embodiment)

An outline of the device of the third embodiment is as follows.

[Outline 1 of Third Embodiment]

A picking device including:

a force sensor that comes into contact with a target and obtains contact information that is a basis for estimating a position and a posture of the target;
a picking mechanism that grasps the target; and
a control device that controls the picking mechanism based on the contact information acquired from the force sensor, in which the control device includes

a pre-learning unit that performs pre-learning of a learning model of a picking operation using a learning data set generated by using a simulator,
a picking control unit that performs a picking operation by controlling the force sensor and the picking mechanism using the pre-learned learning model, and
an additional learning unit that additionally learns a learning model of the picking operation using a data set obtained in an actual picking operation.

[Outline 2 of Third Embodiment]

The picking device according to outline 1 of the third embodiment,

in which the pre-learning unit performs pre-learning of a position and posture estimation learning model that estimates the position and the posture of the target based on shape definition data that defines a shape of the target, the control device further includes a position and posture estimation unit that estimates the position and the posture of the target by using the contact information obtained from the force sensor as an input to the position and posture estimation learning model, the picking control unit controls an operation of the picking mechanism based on the position and the posture estimated by the position and posture estimation unit, and the additional learning unit performs additional learning of the position and posture estimation learning model based on the contact information obtained from the force sensor and a success or a failure of the operation of the picking mechanism by the picking control unit.

[Outline 3 of Third Embodiment]

The picking device according to outline 2 of the third embodiment, in which the control device further includes a position and posture estimation learning model evaluation unit that notifies a user to perform the additional learning by the additional learning unit when a frequency of failures in the operation of the picking mechanism is more than a reference value.

[Outline 4 of Third Embodiment]

The picking device according to any one of outlines 1 to 3 of the third embodiment, in which the control device further includes:

a position and posture candidate output unit that outputs a plurality of candidates for the position and the posture of the target based on information acquired from the target in a non-contact manner;
a contact path determination unit that uses a contact path determination learning model using the plurality of candidates for the position and the posture of the target as an input and a contact path of the force sensor as an output, and determines the contact path of the force sensor based on the plurality of candidates output from the position and posture candidate output unit; and
a contact path determination learning unit that learns the contact path determination learning model by using the plurality of candidates for the position and the posture of the target output from the position and posture candidate output unit and contact paths determined for the plurality of candidates.

[Outline 5 of Third Embodiment]

The picking device according to outline 4 of the third embodiment, in which the contact path determination learning unit performs at least one of

reinforcement learning using a set of the plurality of candidates for the position and the posture of the target as a "state", a contact operation by the plurality of contact paths as a "behavior", and the number of reduced candidates for the position and the posture of the target as a "reward", and
imitation learning based on the plurality of candidates for the position and the posture of the target and a contact path designated by a user.

[Outline 6 of Third Embodiment]

The picking device according to outline 4 or 5 of the third embodiment,

in which the control device further includes
a contact path determination learning model evaluation unit that counts, for each of targets, the number of times the force sensor is brought into contact with the target until picking is successful, and when the number of contacts is more than a reference value, notifies the user to perform the learning of the contact path determination learning model.

[Outline 7 of Third Embodiment]

The picking device according to any one of outlines 1 to 6 of the third embodiment, in which the control device further includes a shape definition data acquisition unit that receives an input of shape definition data that defines a shape of the target.

[Outline 8 of Third Embodiment]

A learning device that performs pre-learning of a learning model of a picking operation using a learning data set generated by using a simulator, and
performs additional learning of a learning model of the picking operation using a data set obtained in a picking operation performed by controlling a force sensor that comes into contact with a target and obtains contact information and a picking mechanism that grasps the target using the pre-learned learning model.

The first to third embodiments have been described above. The configuration of the first embodiment, the configuration of the second embodiment, and the configuration of the third embodiment may be combined with each other.

Industrial Applicability

The present invention can be used for an information processing device and a picking device.

Reference Signs List

1 Picking device (information processing device)
10 Control unit
11 Object information storage unit
12 Photographing control unit
13 Movement control unit
14 Estimation unit
15 Robot control unit
16 Interface
21 Photographing unit
22 Force sensor
23 Drive device
24 Robot arm (take-out mechanism)
Q1, Q2 object
R0 Initial region
h1, h2, h11 to h13 Contact path
p1, p2, p11 to p13 Contact point
s11a, s21 Surface of a portion having asymmetry
110 Control device
111 Trajectory information acquisition unit
112 Imitation learning unit
113 Allowable range determination unit
114 Movement range limiting unit
115 Arm control unit
116 Interface unit
120 Movable arm
120A End effector
121 Input unit
122 Display unit
123 Camera
125 Base stage
130 Allowable movement range
130A Allowable movement range before modification
130B Modified allowable movement range
131 Movement trajectory during teaching
132 Candidate for movement path
133 Entire movable range of movable arm
140 Robot
150 Control server

151 Trajectory information receiving unit
152 Imitation learning unit
153 Allowable range determination unit
154 Movement range limiting unit
155 Movement path transmitting unit
156 Display unit
160 Network
210 Control device
211 Shape definition data acquisition unit
212 Pre-learning unit
213 Position and posture candidate output unit
214 Contact path determination unit
215 Contact information acquisition unit
216 Position and posture estimation unit
217 Picking control unit
218 Position and posture estimation additional learning unit
219 Contact path determination reinforcement learning unit
220 Contact path determination imitation learning unit
221 Position and posture estimation learning model evaluation unit
222 Contact path determination learning model evaluation unit
231 Position and posture estimation learning model
232 Contact path determination learning model
240 Picking mechanism
241 Articulated robot arm
242 Grasping portion
243 Force sensor
251 Output device
252 Input device
253 Imaging device
260 Image of target
261 Candidate for position and posture
262 Contact path designation arrow
263 Pointer
264 Determine button

**Claims**

1. An information processing device for estimating a posture of an object, the information processing device comprising:

a storage unit that stores object information indicating a shape and a size of the object;
a force sensor that acquires detection information on a contact point by a contact;
a movement control unit that moves the force sensor; and
an estimation unit that estimates the posture of the object based on the detection information obtained from a plurality of the contacts of the force sensor with the object, and the object information,
wherein the movement control unit moves the force sensor so that the force sensor comes into contact with different surfaces of the object in the plurality of contacts.

2. The information processing device according to claim 1,

wherein the detection information includes information on a position of the contact point and a normal to a surface including the contact point, and
the movement control unit moves the force sensor, at a time of an n-th contact among the plurality of contacts, in a direction intersecting a normal to a surface including a contact point contacted before the n-th contact.

3. The information processing device according to claim 1 or 2,

wherein the estimation unit estimates a plurality of candidates for the posture of the object before the plurality of contacts are performed, and

the movement control unit moves the force sensor such that the force sensor comes into contact with a surface having a higher degree of uncertainty in positions of surfaces included in the plurality of candidates than the other surfaces included in the plurality of candidates.

4. The information processing device according to any one of claims 1 to 3,
wherein the movement control unit moves the force sensor such that the force sensor comes into contact with a portion of the object having asymmetry.

5. The information processing device according to any one of claims 1 to 4, further comprising:

a photographing unit that acquires an image of the object,
wherein the estimation unit estimates a position where the force sensor is able to come into contact with the object based on the image.

6. A picking device comprising:

the information processing device according to any one of claims 1 to 5; and
a take-out mechanism that takes out the object using an estimation result of the estimation unit.

7. The information processing device according to claim 1, further comprising:

a trajectory information acquisition unit that acquires trajectory information indicating a movement trajectory of a movable arm given by teaching;
an allowable range determination unit that determines an allowable movement range of the movable arm from the trajectory information acquired by the trajectory information acquisition unit; and
a movement range limiting unit that limits a movement range of the movable arm within the allowable movement range determined by the allowable range determination unit.

8. The information processing device according to claim 1, further comprising:
a learning device that performs pre-learning of a learning model of a picking operation using a learning data set generated by using a simulator, and performs additional learning of the learning model of the picking operation using a data set obtained in a picking operation performed by controlling the force sensor that comes into contact with a target and obtains contact information and a picking mechanism that grasps the target using the pre-learned learning model.

# FIG. 1

EP 4 252 975 A1

# FIG. 2

```
                    ( PICKING PROCESS )
                            │
            ┌──────────────────────────────────┐
            │      ACQUIRE IMAGE OF OBJECT      │─ S1
            └──────────────────────────────────┘
                            │
            ┌──────────────────────────────────┐
            │  SET INITIAL REGION INCLUDING OBJECT │─ S2
            └──────────────────────────────────┘
                            │
            ┌──────►────────┤
            │               ▼
            │        ╱─────────────╲          S3    YES
            │       ╱  FIRST CONTACT? ╲──────────────────────┐
            │       ╲                ╱                       │
            │        ╲──────┬───────╱                        │
            │               │ NO                             │
            │   ┌──────────────────────────────────────────┐│
            │   │ CALCULATE CONTACT PATH ACCORDING TO FIRST CONTACT CONDITION │─ S4
            │   │ (PATH FOR CONTACT WITH DIFFERENT SURFACE)  ││
            │   └──────────────────────────────────────────┘│
            │               │                                │
            │   ┌──────────────────────────────────────────┐│
            │   │ CALCULATE CONTACT PATH ACCORDING TO THIRD CONTACT CONDITION │─ S5
            │   │ (PATH FOR CONTACT WITH SURFACE HAVING HIGH DEGREE OF UNCERTAINTY) ││
            │   └──────────────────────────────────────────┘│
            │               │◄───────────────────────────────┘
            │   ┌──────────────────────────────────────────┐
            │   │ CALCULATE CONTACT PATH ACCORDING TO SECOND CONTACT CONDITION │─ S6
            │   │ (PATH FOR CONTACT WITH SURFACE HAVING ASYMMETRY) │
            │   └──────────────────────────────────────────┘
            │               │
            │        ╱─────────────────╲        S7    NO
            │       ╱    IS CONTACT      ╲──────────────────┐
            │      ╱ PATH ACCORDING TO ANY OF ╲             │
            │      ╲ CONDITIONS PRESENT?   ╱                │
            │       ╲──────────┬─────────╱                  │
            │               │ YES      S8                S9 ▼
            │   ┌──────────────────────┐    ┌──────────────────────────┐
            │   │ EXTRACT CONTACT PATH HAVING │    │   SELECT ANY CONTACT PATH   │
            │   │      HIGH PRIORITY        │    └──────────────────────────┘
            │   └──────────────────────┘               │
            │               │◄─────────────────────────┘
            │   ┌──────────────────────┐
            │   │  MOVE FORCE SENSOR ALONG  │─ S10
            │   │      CONTACT PATH         │
            │   └──────────────────────┘
            │               │
            │   ┌──────────────────────┐
            │   │ ACQUIRE DETECTION INFORMATION ON │─ S11
            │   │       CONTACT POINT        │
            │   └──────────────────────┘
            │               │
            │   ┌──────────────────────┐
            │   │    ESTIMATION PROCESS     │─ S12
            │   └──────────────────────┘
            │               │
            │  NO    ╱─────────────────╲      S13
            └────────╱   IS THERE ONE      ╲
                     ╲  ESTIMATION RESULT?  ╱
                      ╲──────────┬────────╱
                            │ YES
                ┌──────────────────────────┐
                │ CALCULATE PICKING PROCEDURE │─ S14
                │   USING ESTIMATION RESULT    │
                └──────────────────────────┘
                            │
                ┌──────────────────────────┐
                │      PICKING PROCESS       │─ S15
                └──────────────────────────┘
                            │
                        (  END  )
```

## FIG. 3A

## FIG. 3B

## FIG. 3C

## FIG. 3D

## FIG. 3E

## FIG. 4A

## FIG. 4B

Z
Y⊗→X

R0
p11  k11
s11
Q2

## FIG. 4C

Z
Y⊗→X
R0
Q2
p11  k11
h12  s11
c12

## FIG. 4D

Z
Y⊗→X
R0  s21
p12  p11  k11
k12  S11a
s12
Q2

# FIG. 4E

# FIG. 4F

# FIG. 5

## FIG. 6A

## FIG. 6B

# FIG. 7

START

ACQUIRE IMAGE DATA OBTAINED BY IMAGING WORKPIECE — SS1

CALCULATE CANDIDATE FOR MOVEMENT PATH OF MOVABLE ARM — SS2

DOES CANDIDATE FOR MOVEMENT PATH FALL WITHIN ALLOWABLE MOVEMENT RANGE? — SS3

N

Y

IS THERE ANOTHER CANDIDATE? — SS4

Y

N

OPERATE MOVABLE ARM ALONG CALCULATED MOVEMENT PATH — SS6

ISSUE ERROR AND STOP — SS5

IS PROCESS COMPLETED? — SS7

N

Y

END

## FIG. 8A

## FIG. 8B

# FIG. 9A

# FIG. 9B

# FIG. 10

DRAG OUTER PERIPHERAL LINE OF
ALLOWABLE RANGE FOR MODIFICATION.

BACK

ALLOWABLE
RANGE CONFIRM

# FIG. 11

- 140
- 121 INPUT UNIT
- 123 CAMERA
- 120
- 120A
- 116
- 110
- INTERFACE UNIT
- 111 TRAJECTORY INFORMATION ACQUISITION UNIT
- 115 ARM CONTROL UNIT
- 160
- 150
- 151 TRAJECTORY INFORMATION RECEIVING UNIT
- 152 IMITATION LEARNING UNIT
- 153 ALLOWABLE RANGE DETERMINATION UNIT
- 154 MOVEMENT RANGE LIMITING UNIT
- 155 MOVEMENT PATH TRANSMITTING UNIT
- 156 DISPLAY UNIT
- 140
- 140

# FIG. 12

210

211
SHAPE DEFINITION DATA ACQUISITION UNIT

212
PRE-LEARNING UNIT

213
POSITION AND POSTURE CANDIDATE OUTPUT UNIT

214
CONTACT PATH DETERMINATION UNIT

215
CONTACT INFORMATION ACQUISITION UNIT

216
POSITION AND POSTURE ESTIMATION UNIT

217
PICKING CONTROL UNIT

231
POSITION AND POSTURE ESTIMATION LEARNING MODEL

232
CONTACT PATH DETERMINATION LEARNING MODEL

218
POSITION AND POSTURE ESTIMATION ADDITIONAL LEARNING UNIT

219
CONTACT PATH DETERMINATION REINFORCEMENT LEARNING UNIT

220
CONTACT PATH DETERMINATION IMITATION LEARNING UNIT

221
POSITION AND POSTURE ESTIMATION LEARNING MODEL EVALUATION UNIT

222
CONTACT PATH DETERMINATION LEARNING MODEL EVALUATION UNIT

251
OUTPUT DEVICE

252
INPUT DEVICE

253
IMAGING DEVICE

240
241
243
242

## FIG. 13A

## FIG. 13B

FIG. 14

# FIG. 15

$$\left\{ \begin{array}{c} p\_1, f\_1 \\ p\_2, f\_2 \\ p\_3, f\_3 \\ \vdots \\ p\_k, f\_k \end{array} \right\} \quad \left\{ t, r \right\} \Rightarrow \quad \left\{ \begin{array}{c} p'\_1, f'\_1 \\ p'\_2, f\_2 \\ p'\_3, f'\_3 \\ \vdots \\ p'\_k, f'\_k \end{array} \right\}$$

# FIG. 16

```
        ( ADDITIONAL LEARNING )
                   │
                   ▼
      N      ╱  IS PICKING      ╲ ─── SA1
    ◄────────  OPERATION SUCCESSFUL?
            ╲                   ╱
                   │ Y
                   ▼
   ┌─────────────────────────────────────┐
   │ ACCUMULATE CONTACT INFORMATION INPUT TO │
   │ POSITION AND POSTURE ESTIMATION LEARNING │ ─── SA2
   │ MODEL AND INFORMATION OUTPUT AT THAT    │
   │ TIME AS NEW LEARNING DATA SET           │
   └─────────────────────────────────────┘
                   │
                   ▼
      N      ╱  IS AMOUNT OF        ╲ ─── SA3
    ◄──────── ACCUMULATED LEARNING DATA SET
            ╲ MORE THAN REFERENCE  ╱
              ╲    VALUE?         ╱
                   │ Y
                   ▼
   ┌─────────────────────────────────────┐
   │ ADDITIONALLY LEARN POSITION AND POSTURE │ ─── SA4
   │ ESTIMATION LEARNING MODEL               │
   └─────────────────────────────────────┘
                   │
                   ▼
              (   END   )
```

# FIG. 17

```
        ( REINFORCEMENT LEARNING )
                    │
                    ▼
   ┌───────────────────────────────────┐
   │ ACQUIRE PLURALITY OF CANDIDATES FOR │──── SB1
   │ POSITION AND POSTURE                │
   └───────────────────────────────────┘
                    │
                    ▼
   ┌───────────────────────────────────┐
   │ DETERMINE CONTACT PATH FROM PLURALITY OF │──── SB2
   │ CANDIDATES                        │
   └───────────────────────────────────┘
                    │
                    ▼
   ┌───────────────────────────────────┐
   │ CONTACT OPERATION                 │──── SB3
   │                                   │
   └───────────────────────────────────┘
                    │
                    ▼
   ┌───────────────────────────────────┐
   │ NARROW DOWN CANDIDATES FROM RESULT OF │──── SB4
   │ CONTACT OPERATION, AND CALCULATE REWARD │
   └───────────────────────────────────┘
                    │
                    ▼
              IS PROCEDURE
   N       REPEATED PREDETERMINED        ──── SB5
            NUMBER OF TIMES?
                    │ Y
                    ▼
   ┌───────────────────────────────────┐
   │ LEARN CONTACT PATH DETERMINATION LEARNING │──── SB6
   │ MODEL BASED ON PLURALITY OF CONTACT PATHS │
   │ HAVING HIGH TOTAL REWARD          │
   └───────────────────────────────────┘
                    │
                    ▼
                 ( END )
```

# FIG. 18

```
              ┌──────────────────────┐
              │   IMITATION LEARNING  │
              └──────────────────────┘
                         │
                         ▼
┌──────────────────────────────────────────────┐
│ ACQUIRE PLURALITY OF CANDIDATES FOR POSITION AND │──── SC1
│ POSTURE AND IMAGE DATA                          │
└──────────────────────────────────────────────┘
                         │
                         ▼
┌──────────────────────────────────────────────┐
│ DISPLAY FIGURES OF PLURALITY OF CANDIDATES AND  │──── SC2
│ ACTUAL IMAGE TO BE SUPERPOSED                   │
└──────────────────────────────────────────────┘
                         │
                         ▼
┌──────────────────────────────────────────────┐
│ DESIGNATE CONTACT PATH BY USER                  │──── SC3
└──────────────────────────────────────────────┘
                         │
                         ▼
┌──────────────────────────────────────────────┐
│ PERFORM LEARNING BASED ON PLURALITY OF          │──── SC4
│ CANDIDATES AND CONTACT PATH DESIGNATED BY USER  │
└──────────────────────────────────────────────┘
                         │
                         ▼
                   ┌──────────┐
                   │   END    │
                   └──────────┘
```

# FIG. 19

DESIGNATE CONTACT POSITION AND CONTACT PATH OF FORCE SENSOR

251

260

262

263

264

DETERMINE

261

# FIG. 20

```
        ( OPERATION MODE )
               │
               ▼
    N    ╱ IS TARGET NEW? ╲──── SD1
  ┌──────╲                ╱
  │        ╲            ╱
  │           │ Y
  │           ▼
  │  ┌─────────────────────────┐
  │  │ ACQUIRE SHAPE DEFINITION DATA │──── SD2
  │  └─────────────────────────┘
  │           │
  │           ▼
  │  ┌─────────────────────────┐
  │  │       PRE-LEARNING       │──── SD3
  │  └─────────────────────────┘
  │           │
  └───────────┤
              ▼
     ┌─────────────────────────┐
     │ OUTPUT CANDIDATES FOR POSITION │──── SD4
     │   AND POSTURE OF TARGET   │
     └─────────────────────────┘
              │
  ┌───────────┤
  │           ▼
  │  ┌─────────────────────────┐
  │  │     CONTACT OPERATION    │──── SD5
  │  └─────────────────────────┘
  │           │
  │           ▼
  │  ┌─────────────────────────┐
  │  │ ESTIMATE POSITION AND POSTURE │──── SD6
  │  │        OF TARGET         │
  │  └─────────────────────────┘
  │           │
  │           ▼
  │  ┌─────────────────────────┐
  │  │     PICKING OPERATION    │──── SD7
  │  └─────────────────────────┘
  │           │
  │           ▼
  │    N   ╱ IS PICKING ╲──── SD8
  └────────╲ SUCCESSFUL? ╱
            ╲          ╱
               │ Y
               ▼
     ┌─────────────────────────┐
     │    ADDITIONAL LEARNING   │──── SD9
     └─────────────────────────┘
               │
               ▼
           (   END   )
```

# FIG. 21

```
        ( LEARNING MODE )
              │
              ▼
      ╔═══════════════╗ ─── SD1
  N   ║  IS TARGET NEW? ║
◄─────╚═══════════════╝
│             │ Y
│             ▼
│     ┌──────────────────────────┐ ─── SD2
│     │ ACQUIRE SHAPE DEFINITION DATA │
│     └──────────────────────────┘
│             │
│             ▼
│     ┌──────────────────────────┐ ─── SD3
│     │       PRE-LEARNING        │
│     └──────────────────────────┘
│             │
└─────────────┤
              ▼
      ┌──────────────────────────┐ ─── SD4
      │ OUTPUT CANDIDATES FOR POSITION │
      │   AND POSTURE OF TARGET   │
      └──────────────────────────┘
              │
              ▼
      ╔═══════════════╗
      ║ SELECT LEARNING ║
      ║     METHOD      ║
      ╚═══════════════╝
      │                 │
      ▼                 ▼
┌────────────┐ SE1   ┌────────────┐ SE2
│REINFORCEMENT│      │ IMITATION  │
│  LEARNING   │      │  LEARNING  │
└────────────┘       └────────────┘
      │                 │
      └────────┬────────┘
               ▼
      ┌──────────────────────────┐ ─── SD5
      │      CONTACT OPERATION     │
      └──────────────────────────┘
               │
               ▼
      ┌──────────────────────────┐ ─── SD6
      │ ESTIMATE POSITION AND POSTURE │
      │        OF TARGET          │
      └──────────────────────────┘
               │
               ▼
      ┌──────────────────────────┐ ─── SD7
      │      PICKING OPERATION     │
      └──────────────────────────┘
               │
               ▼
      ╔═══════════════╗ ─── SD8
  N   ║   IS PICKING    ║
◄─────║  SUCCESSFUL?    ║
      ╚═══════════════╝
               │ Y
               ▼
      ┌──────────────────────────┐ ─── SD9
      │     ADDITIONAL LEARNING    │
      └──────────────────────────┘
               │
               ▼
            ( END )
```

## INTERNATIONAL SEARCH REPORT

| International application No. |
|---|
| **PCT/JP2021/043129** |

**A. CLASSIFICATION OF SUBJECT MATTER**

**B25J 13/08**(2006.01)i
FI: B25J13/08 Z

According to International Patent Classification (IPC) or to both national classification and IPC

**B. FIELDS SEARCHED**

Minimum documentation searched (classification system followed by classification symbols)

B25J1/00-21/02

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | JP 2015-71207 A (TOYOTA IND CORP) 16 April 2015 (2015-04-16) paragraphs [0016]-[0050], fig. 1-12 | 1-2, 5 |
| Y | | 4, 6-8 |
| A | | 3 |
| Y | JP 2012-55999 A (CANON INC) 22 March 2012 (2012-03-22) paragraphs [0010]-[0012], [0025], fig. 1-2 | 4, 6 |
| Y | JP 10-187221 A (NISSAN MOTOR CO LTD) 14 July 1998 (1998-07-14) paragraph [0051] | 7 |
| Y | JP 2018-202550 A (HITACHI LTD) 27 December 2018 (2018-12-27) paragraphs [0011], [0085]-[0086] | 8 |

☐ Further documents are listed in the continuation of Box C.    ☑ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **28 January 2022** | **08 February 2022** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

## INTERNATIONAL SEARCH REPORT
### Information on patent family members

| International application No. |
| --- |
| **PCT/JP2021/043129** |

| Patent document<br>cited in search report | Publication date<br>(day/month/year) | Patent family member(s) | Publication date<br>(day/month/year) |
| --- | --- | --- | --- |
| JP 2015-71207 A | 16 April 2015 | (Family: none) | |
| JP 2012-55999 A | 22 March 2012 | US 2012/0059517 A1<br>paragraphs [0027]-[0029],<br>[0043], fig. 1-2C | |
| JP 10-187221 A | 14 July 1998 | US 5956465 A<br>column 26, lines 27-35<br>KR 10-0471643 B1 | |
| JP 2018-202550 A | 27 December 2018 | (Family: none) | |

Form PCT/ISA/210 (patent family annex) (January 2015)

## REFERENCES CITED IN THE DESCRIPTION

**Patent documents cited in the description**

- JP 2017136677 A
- JP 2020110920 A

- JP 2020082322 A

**Non-patent literature cited in the description**

- **S. LEVINE.** *End-to-End Trading of Deep Visuomotor Policies,* 2016